# EUROPÄISCHE PATENTANMELDUNG

(11) **EP 2 618 045 A1**
(43) Veröffentlichungstag der Anmeldung: **24.07.2013**
(21) Anmeldenummer: 13151872.2
(22) Anmeldetag: 18.01.2013
(51) Int. Cl.: F21S 8/10

(54) **Beleuchtungseinrichtung für ein Kraftfahrzeug**

(30) Priorität: 20.01.2012 DE 202012000567 U
(71) Anmelder: Automotive Lighting Reutlingen GmbH, 72762 Reutlingen (DE)
(72) Erfinder: Zwick, Hubert, 70173 Stuttgart (DE); Lampen, Martin, 72072 Tübingen (DE)
(74) Vertreter: Dreiss

(57) **Zusammenfassung**

Die Erfindung betrifft eine Beleuchtungseinrichtung für ein Kraftfahrzeug mit einer Anordnung aus einer Lichtquelle (12) und einem Lichtleiter (10), wobei die Anordnung dazu eingerichtet ist, Licht der Lichtquelle über eine Lichteintrittsfläche des Lichtleiters in den Lichtleiter einzukoppeln und dieses Licht längs einer der Form des Lichtleiters folgenden Hauptausbreitungsrichtung zwischen als Transportflächen dienenden Seitenflächen des Lichtleiters zu einer Lichtaustrittsfläche des Lichtleiters zu führen. Dabei ist die Lichtaustrittsfläche eine Grenzfläche eines quer zur Hauptausbreitungsrichtung aus einer Seite des Lichtleiters herausragenden Auskoppelelements (14) und die Beleuchtungseinrichtung weist ein Licht brechendes optisches Element (214) auf, das dazu eingerichtet ist, aus der Lichtaustrittsfläche (32) ausgekoppeltes Licht in wenigstens eine vorbestimmte Richtung zu lenken.

## Beschreibung

Die vorliegende Erfindung betrifft eine Beleuchtungseinrichtung für ein Kraftfahrzeug mit einer Anordnung aus einer Lichtquelle und einem Lichtleiter, wobei die Anordnung dazu eingerichtet ist, Licht der Lichtquelle über eine Lichteintrittsfläche des Lichtleiters in den Lichtleiter einzukoppeln, dieses Licht längs einer der Form des Lichtleiters folgenden Hauptausbreitungsrichtung zwischen als Transportflächen dienenden Seitenflächen des Lichtleiters zu einer Lichtaustrittsfläche des Lichtleiters zu führen und aus einer Seitenfläche des Lichtleiters auszukoppeln.

Eine solche Beleuchtungseinrichtung ist per se bekannt. Lichtleiter als solche sind in vielfältigen Ausgestaltungen bekannt und zeichnen sich dadurch aus, Licht längs einer Hauptausbreitungsrichtung nahezu verlustfrei auch über gekrümmte Wege führen und verteilen zu können. Das Prinzip der nahezu verlustlosen Leitung basiert auf dem Phänomen der internen Totalreflexion, bei der auf eine Grenzfläche auftreffendes Licht zu nahezu 100 % reflektiert wird, solange der gegen die Flächennormale gemessene Auftreffwinkel nicht kleiner als der Grenzwinkel der Totalreflexion ist. Unter einer Transportfläche wird hier eine Fläche verstanden, an der solche internen Totalreflexionen auftreten und die das Licht weitgehend längs zur Hauptausbreitungsrichtung reflektieren.

Um mit Hilfe des Lichtleiters eine gewünschte Lichtverteilung der Beleuchtungseinrichtung zu erzeugen, muss Licht über eine Lichtaustrittsfläche des Lichtleiters ausgekoppelt werden. Dies erfolgt beim Stand der Technik dadurch, dass an einer Grenzfläche des Lichtleiters Störelemente wie prismatische oder zylindrische Kerben, eine Aufrauhung, ein Farbaufdruck oder etwas Ähnliches angebracht werden. Diese oder andere Störelemente haben die Aufgabe, das weitgehend längs der Hauptausbreitungsrichtung propagierende und auf die Störelemente auftreffende Licht quer zur Hauptausbreitungsrichtung umzulenken. Als Folge läuft das an den Störelementen reflektierte Licht von der Seite des Lichtleiters, die die Störelemente aufweist, noch einmal quer zu der Hauptausbreitungsrichtung zu der dieser Seite gegenüberliegenden Lichtaustrittsfläche des Lichtleiters. Aufgrund der vorhergehenden Umlenkung trifft ein großer Teil dieses Lichtes dort unter Winkeln zur Flächennormalen auf, unter denen es keine interne Totalreflexion mehr erfährt, sondern aus dem Lichtleiter ausgekoppelt wird.

Auf die Lichtaustrittsfläche unter hinreichend größeren Winkeln zur Flächennormalen einfallendes Licht wird dagegen nicht ausgekoppelt, sondern es erfährt an der Lichtaustrittsfläche interne Totalreflexionen. Solches Licht stammt von Reflexionen, die nicht an den genannten Störelementen, sondern an im Lichtweg vor den Störelementen liegenden Transportflächen erfolgten. Die Lichtaustrittsfläche dient insofern nicht nur der Lichtauskopplung, sondern sie dient auch als Transportfläche für die nahezu verlustlose Lichtleitung.

Diese Mehrfachfunktion der Lichtaustrittsfläche ist beim Stand der Technik auch deshalb wichtig, weil dort bereits eine der Lichtaustrittsfläche gegenüberliegende Grenzfläche mit den genannten Störelementen versehen ist und insofern als Transportfläche ausfällt. Die Transportflächenfunktion der Lichtaustrittsfläche trägt damit zu einer unter Umständen erwünschten Weiterleitung von Licht über die Störelemente hinweg bei. Ein über erste Störelemente hinweg erfolgender Transport eines Teils des Lichtes ist insbesondere dann wichtig, wenn Licht mit Hilfe von mehreren hintereinander liegenden Störelementen längs eines größeren Abschnitts der Lichtleiterlänge mit möglichst gleichmäßiger Beleuchtungsstärke ausgekoppelt werden soll.

Diese Mehrfachfunktion als Lichtaustrittsfläche und als Transportfläche schränkt die Möglichkeiten stark ein, die Form der Lichtaustrittsfläche in Bezug darauf zu optimieren, das ausgekoppelte Licht zu bündeln und/oder in bestimmte Richtungen zu lenken. Darüber hinaus kann diese Fläche aber auch nicht für ihre Funktion als Transportfläche optimiert werden, da sie gleichzeitig noch als Lichtaustrittsfläche dienen soll.

Die Aufgaben der Bündelung und Umlenkung des auszukoppelnden Lichtes in bestimmte Richtungen werden beim Stand der Technik zum Teil durch eine entsprechende Geometrie der Störelemente übernommen. Aber auch diese Geometrie ist nur in begrenztem Umfang frei wählbar, weil die Störelemente das Licht nahezu verlustlos umlenken sollen und daher die für interne Totalreflexion erforderlichen Bedingungen erfüllen müssen. Die meist länglichen Stäbe oder Platten führen dabei das Licht an ihren unbeschichteten Wandungen mittels Totalreflexion. In der Regel wird das Licht der Lichtquellen an einer Stirnseite eingekoppelt. Zur gezielten Auskoppelung zwischen der Lichteintrittsfläche und dem gegenüberliegenden Ende des Lichtleiters wird jeweils ein kleiner Anteil des Lichts so umgelenkt, dass der Grenzwinkel der Totalreflexion unterschritten wird. Dies erfolgt über viele kleine prismatische Reflexionselemente. Jedes dieser prismatischen Reflexionselemente besitzt in der Regel eine totalreflektierende, ebene Fläche, die gegenüber der sie umgebenden Transportfläche verkippt ist und einen kleinen Teil des im Lichtleiter propagierenden Lichtes auf die meist gegenüberliegende Außenhaut des Lichtleiters lenkt, wo es so steil auftrifft, dass es ausgekoppelt wird. Die so ausgekoppelten Lichtbündel überlagern sich zur gewünschten Lichtverteilung einer speziellen Beleuchtungsaufgabe. Das Licht besitzt nach dem Verlassen dieser letzten Grenzfläche des Lichtleiters in der Regel seine endgültige Abstrahlcharakteristik. In seltenen Fällen werden nach dem Lichtleiter zusätzliche Streuoptiken verwendet.

Die Geometrie der beim Stand der Technik üblichen prismatischen Reflexionselemente erlaubt es nicht, allen von ihnen beeinflussten Strahlen die gewünschte Richtung zu geben. Denn ein erheblicher Anteil trifft nicht die primäre optisch gestaltete Umlenkfläche, sondern unvermeidliche Radien, Seitenflächen, etc. der prismatischen Reflexionselemente und wird so für die Beleuchtungsaufgabe unvorteilhaft oder sogar gänzlich unbrauchbar abgelenkt.

Es hat sich zum Beispiel bei Lichtleitern, die in Kraftfahrzeugleuchten verwendet werden, als schwierig erwiesen, mehr als 15% des von einer Lichtquelle in den Lichtleiter eingekoppelten Lichtes in den Bereich einer gesetzlich vorgeschriebenen Lichtverteilung der Leuchte zu strahlen.

Vor diesem Hintergrund besteht die Aufgabe der Erfindung in der Angabe einer Beleuchtungseinrichtung der eingangs genannten Art, bei der die genannten Einschränkungen in Bezug auf ihre Funktion, auszukoppelndes Licht zu bündeln und/oder in bestimmte Richtungen zu lenken, weniger stark ausgeprägt sind und die eine hohe Effizienz aufweist. Unter einer hohen Effizienz wird dabei verstanden, dass weniger Lichtverluste auftreten als beim Stand der Technik.

Diese Aufgabe wird mit den Merkmalen des Anspruchs 1 gelöst. Danach zeichnet sich die Erfindung insbesondere dadurch aus, dass die Lichtaustrittsfläche eine Grenzfläche eines quer zur Hauptausbreitungsrichtung aus einer Seite des Lichtleiters herausragenden Auskoppelelements ist, und dass die Beleuchtungseinrichtung ein Licht brechendes optisches Element aufweist, das dazu eingerichtet ist, aus der Lichtaustrittsfläche ausgekoppeltes Licht in wenigstens eine vorbestimmte Richtung zu lenken.

Durch diese Merkmale wird insgesamt eine Beleuchtungseinrichtung bereitgestellt, bei der das Auskoppelelement nicht in die totalreflektierende Oberfläche des Hauptlichtleiters hineinragt, sondern vielmehr eine Unterbrechung in der totalreflektierenden Oberfläche, also in der Außenhaut des Lichtleiters ist. Es ist als kurze seitliche Abzweigung des Hauptlichtleitervolumens ausgeführt. Diese Abzweigung ist in einem Stück mit dem Hauptlichtleiter hergestellt und besteht daher aus demselben Material wie dieser. Er bildet eine Unterbrechung der totalreflektierenden Oberfläche des Hauptlichtleiters, die es dem Licht ermöglicht in die Abzweigung zu gelangen. Es beeinflusst die Strahlrichtungen in der Abzweigung nicht, und es erzeugt keine Strahlen, die in den Hauptlichtleiter zurückgelangen. Mit seiner Umrisslinie, längs derer es aus dem Hauptlichtleitervolumen emporragt, bestimmt es die Lichtmenge, die in die Abzweigung, beziehungsweise in das Auskoppelelement gelangen.

Die Auskoppelung des nutzbaren Lichts erfolgt im einfachsten Fall ohne Reflexion an einer Grenzfläche des Auskoppelelements über eine Brechung des Lichtes. Durch die Ausrichtung dieser Grenzfläche kann die Richtung der Kegelachse des ausgekoppelten Lichtbündels in eingeschränktem Umfang beeinflusst werden. Durch die Ausgestaltung als konvexe oder konkave Fläche kann der Öffnungswinkel des Lichtkegels beeinflusst werden. Je nach Bauart des Auskoppelelements können zusätzlich vor dem Austritt in der Abzweigung eine oder mehrere Totalreflexionen genutzt werden. Diese ermöglichen große Richtungsänderungen gegenüber der Lichtrichtung im Hauptlichtleiter. Sie können prinzipiell größer sein als es nach dem Stand der Technik möglich ist. Es können Winkeländerungen bis zu 180° erreicht werden.

Das Auskoppelelement kann auch komplexer aufgebaut sein und das Licht mehrfach reflektieren oder brechen. Dabei sind alle Arten optischer Bauformen möglich. Das Abzweigen eines Auskoppelelements vom Hauptlichtleiter verlegt alle optischen Maßnahmen aus dem Hauptlichtleiter heraus. Dadurch sind die ausgekoppelten Lichtbündel räumlich und optisch leicht zugänglich. Als Folge ergibt sich für solche Auskoppelelemente ein kombinatorischer Effekt durch die Verwendung des Licht brechenden optischen Elements, das dazu eingerichtet ist, aus der Lichtaustrittsfläche ausgekoppeltes Licht in wenigstens eine vorbestimmte Richtung zu lenken. Einerseits ergibt sich durch die optisch und räumlich leichte Zugänglichkeit der ausgekoppelten Bündel erst die Möglichkeit, Licht brechende optische Elemente wie Linsen im Strahlengang des ausgekoppelten Lichtes in unmittelbarer Nähe zur Auskoppelfläche zu verwenden, so dass sich eine individuelle Zuordnung eines Auskoppelelements zu einem optischen Element ergibt. Andererseits ergibt sich durch die Verwendung solcher optischer Elemente eine Möglichkeit, das ausgekoppelte Licht gezielt zu lenken und zu formen, also beispielsweise zu parallelisieren oder zu bündeln. Vorteilhaft ist auch, dass die Hauptlichtleitergeometrie und ihre optischen Erfordernisse von Anforderungen an die Form der ausgekoppelten Lichtbündel entkoppelt behandelt und optimiert werden können.

Es besteht auch die Möglichkeit, Lichtleiter mit mehreren Auskoppelelementen zu verwenden, so dass sich voneinander getrennte Auskopplungsflächen ergeben. Dadurch kann der Eindruck entsprechend vieler Lichtquellen erzeugt werden. Der Querschnitt des Hauptlichtleiters kann durch unterschiedlichste Umrisslinien begrenzt sein. Bevorzugt werden dabei viereckige Querschnitte, insbesondere Parallelogramme und Rechtecke. In anderen Ausgestaltungen können aber auch Querschnitte mit einer anderen Eckenanzahl und/oder gekrümmten Verbindungskurven verwendet werden. Die Erfindung erlaubt auch Querschnittsformen, deren eine Seitenlänge viel kleiner ist als die benachbarte Seitenlänge. Derartige Querschnitte erlauben es, besonders kleine Krümmungsradien im Verlauf des Lichtleiters ohne Auskoppelverluste zu verwirklichen.

Neu ist insbesondere, dass die Lichtaustrittsfläche einen Teil der Grenzfläche des Auskoppelelements bildet, wobei das Auskoppelelement quer zu der Hauptausbreitungsrichtung aus einer Seite des Licht leitenden Volumens herausragt. Dadurch erfolgt die Auskopplung auf der gleichen Seite des Lichtleiters, auf der auch die das Licht zur Lichtaustrittsfläche richtende Umlenkung erfolgt. Das umgelenkte Licht wird damit insbesondere ohne einen weiteren Wechsel der Seite des Lichtleiters direkt auf der Seite des Lichtleiters, auf der es auch zu der Lichtaustrittsfläche umgelenkt wird, aus dem Auskoppelelement ausgekoppelt.

Die für die Auskopplung erforderliche Störung der in die Hauptausbreitungsrichtung erfolgenden Lichtausbreitung durch Auskoppelelemente und die tatsächliche Auskopplung über Lichtaustrittsflächen erfolgt bei der Erfindung damit auf derselben Seite des Lichtleiters. Dadurch bleibt die gegenüberliegende andere Seite frei von Störelementen, die zur Auskopplung von Licht dienen. Diese freibleibende Seite kann daher für ihre Funktion als Transportfläche optimiert werden.

Letztlich sorgt die Erfindung damit für eine räumliche Trennung der für Lichttransport und Lichtauskopplung erforderlichen Grenzflächen des Lichtleiters und erlaubt so eine verbesserte Optimierung jeder einzelnen der Grenzflächen in Bezug auf ihre Aufgabe des Lichttransports oder der Lichtauskopplung.

Die Erfindung erlaubt insbesondere eine von anderen Anforderungen freiere Gestaltung der Lichtaustrittsflächen für eine Lenkung und und/oder Bündelung des Lichtes. Damit kann zum Beispiel bei Kraftfahrzeugleuchten der Anteil des Lichtes der Lichtquelle, der zu der gewünschten Lichtverteilung beiträgt, gesteigert werden.

Das Licht brechende optische Element hat in diesem Zusammenhang die Funktion, aus dem Licht, das aus dem Auskoppelelement oder den Auskoppelelementen austritt, eine gewünschte Lichtverteilung zu erzeugen. Die Ausgestaltung eines solchen optischen Elements hängt im Einzelfall davon ab, inwieweit bereits das aus dem Auskoppelelement oder den Auskoppelelementen, austretende Licht dazu geeignet ist, die Beleuchtungsaufgabe zu erfüllen. Das optische Element kann zum Beispiel eine das Licht bündelnde Optik wie eine Linse und/oder eine das Licht umlenkende Optik wie ein Prisma sein.

Eine bevorzugte Ausgestaltung zeichnet sich dadurch aus, dass es sich bei der Beleuchtungseinrichtung um eine Leuchte zur Beleuchtung des Innenraums des Kraftfahrzeugs oder um eine Signalfunktionen für andere Verkehrsteilnehmer erfüllende Beleuchtungseinrichtung handelt.

Bevorzugt ist auch, dass eine solche Beleuchtungseinrichtung als Bugleuchte oder als Heckleuchte verwendet wird.

Ferner ist bevorzugt, dass die Beleuchtungseinrichtung als Bugleuchte verwendet wird, die in einen Frontscheinwerfer eines Kraftfahrzeugs integriert ist.

Weitere Vorteile ergeben sich aus den abhängigen

Ansprüchen, der Beschreibung und den beigefügten Figuren.

Es versteht sich, dass die vorstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei zeigen, jeweils in schematischer Form:
- Figur 1: eine perspektivische Darstellung eines Ausführungsbeispiels eines erfindungsgemäßen Lichtleiters;
- Figur 2: eine Vorderansicht des Gegenstands der Fig. 1;
- Figur 3: eine Draufsicht auf den Gegenstand der Fig. 1;
- Figur 4: eine Seitenansicht des Gegenstandes der Fig 1;
- Figur 5: ein weiteres Ausführungsbeispiel eines erfindungsgemäßen Lichtleiters;
- Figur 6: noch ein weiteres Ausführungsbeispiel in einer perspektivischen Darstellung;
- Figur 7: eine Draufsicht auf den Gegenstand der Fig. 6;
- Figur 8: eine Vorderansicht des Gegenstands der Fig. 6;
- Figur 9: noch ein weiteres Ausführungsbeispiel eines erfindungsgemäßen Lichtleiters in einer perspektivischen Darstellung;
- Figur 10: eine Vorderansicht des Gegenstandes der Figur 9;
- Figur 11: eine Ausgestaltung des Gegenstandes der Figuren 1 bis 4; und
- Figur 12: verschiedene Ausgestaltungen von Auskoppelelementen erfindungsgemäßer Lichtleiter.
- Figur 13: ein sehr vereinfachtes Modell eines Lichtleiters mit einem ersten Anstellwinkel einer Reflexionsfläche;
- Figur 14: ein Modell eines Lichtleiters mit einem zweiten Anstellwinkel einer Reflexionsfläche;
- Figur 15: eine Draufsicht auf ein Ausführungsbeispiel eines erfindungsgemäßen Lichtleiters;
- Figur 16: eine Ausgestaltung des Lichtleiters aus der Fig. 15;
- Figur 17: einen Lichtleiter mit einer konvex gekrümmten Lichtaustrittsfläche seines Auskoppelelements;
- Figur 18: den Lichtleiter aus der Figur 15 aus einer veränderten Blickrichtung;
- Figur 19: eine Orts-Winkel-Abhängigkeit des ausgekoppelten Lichtes beim Durchtritt durch die Lichtaustrittsfläche;
- Figur 20: eine Ausgestaltung mit einer bündelnden Lichtaustrittsfläche;
- Figur 21: eine Schrägansicht einer zweifach im Raum konvex gekrümmten Lichtaustrittsfläche eines neuartigen Lichtauskoppelelements;
- Figur 22: einen Lichtleiter mit einer Vielzahl der neuartigen Auskoppelelemente;
- Figur 23: einen Lichtleiter mit einer alternativen Auskopplung;
- Fig. 24: ein Ausführungsbeispiel einer erfindungsgemäßen Beleuchtungseinrichtung 100;
- Fig. 25: die Anordnung aus Lichtleiter und Linse aus der Fig. 24 in verschiedenen Ansichten; und
- Fig. 26: eine Ausgestaltung mit einer langestreckten Linse als Licht brechendes optisches Element.

Dabei bezeichnen gleiche Bezugszeichen in verschiedenen

Figuren jeweils gleiche oder zumindest ihrer Funktion nach gleiche Elemente.

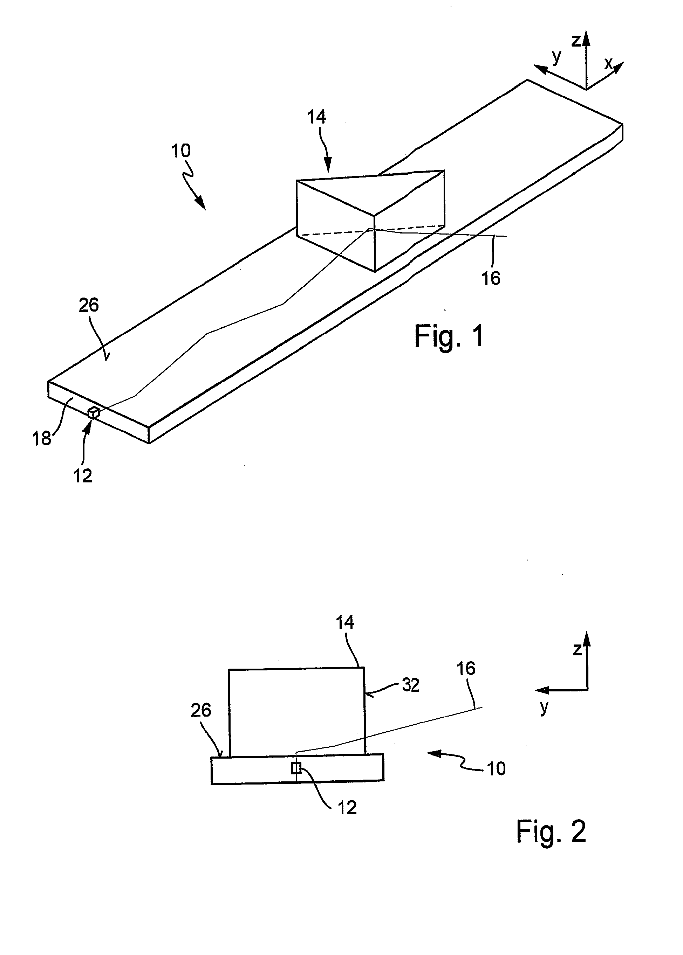

Im Einzelnen zeigen die Figuren 1 bis 4 einen Lichtleiter 10, eine Lichtquelle 12, ein Auskoppelelement 14 des Lichtleiters und einen Lichtstrahl 16. Die Lichtquelle 12 ist bevorzugt eine Halbleiterlichtquelle, die Licht in einen Halbraum abstrahlt. Sie ist bevorzugt dicht vor einer Lichteintrittsfläche 18 des Lichtleiters 10 angeordnet, so dass der größte Teil des von ihr emittierten Lichtes in das Volumen des Lichtleiters 10 eingekoppelt wird. Das eingekoppelte Licht breitet sich dort um eine Hauptausbreitungsrichtung herum aus, die durch die Geometrie des Lichtleiters vorgegeben wird. Die um die Hauptausbreitungsrichtung herum erfolgende Ausbreitung des Lichtes ergibt sich durch interne Totalreflexionen des Lichtes an Grenzflächen des Lichtleiters. Mit solchen Totalreflexionen wird aus dem Volumen heraus auf die Grenzflächen auftreffendes Licht in das Volumen zurückreflektiert. In dem dargestellten Ausführungsbeispiel entspricht die Hauptausbreitungsrichtung der x-Richtung, da der langgestreckte Lichtleiter 10 längs dieser x-Richtung ausgerichtet ist.

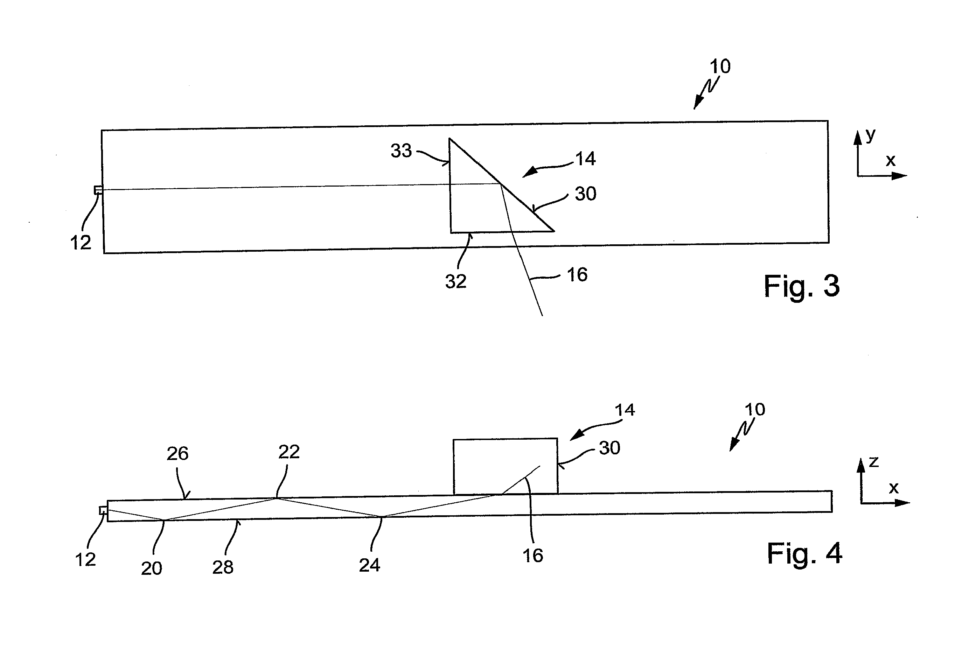

Ein als Beispiel betrachteter Lichtstrahl 16 der Lichtquelle 12 tritt über die Lichteintrittsfläche 18 in das Volumen des Lichtleiters 10 ein und besitzt dabei zunächst Richtungskomponenten in x-Richtung und z-Richtung. Die in der Figur 3 dargestellte Draufsicht zeigt, dass der Lichtstrahl 16 zunächst in x-Richtung geradlinig verläuft. Die in der Figur 4 dargestellte Seitenansicht zeigt, wie der Lichtstrahl 16 dabei durch interne Totalreflexionen 20, 22, 24, die an als Transportflächen dienenden Bereichen von Seiten 26, 28 des Lichtleiters 10 erfolgen, an das Volumen des Lichtleiters 10 gebunden bleibt und in diesem Volumen um die Hauptausbreitung x herum weiterläuft. Dabei erreicht der Lichtstrahl 16 das Auskoppelelement 14.

Wie die Figuren 1, 2 und 4 zeigen, ragt das Auskoppelelement 14 quer zu der Hauptausbreitungsrichtung x aus einer Seite 26 des lichtleitenden Volumens des Lichtleiters 10 heraus. Das Auskoppelelement 14 ist bevorzugt ein Teil des Lichtleiters 10, so dass das Volumen des Lichtleiters 10 in das Volumen des Auskoppelelements 14 übergeht, ohne dass sich zwischen diesen beiden Volumina eine Grenzfläche ausbildet. Als Folge tritt Licht, wie das Licht des Lichtstrahls 16, zunächst in das aus der Seite 26 herausragende Volumen des Auskoppelelements 14 ein. Dies ist insbesondere aus der Figur 4 ersichtlich.

Das Auskoppelelement 14 besitzt in der Ausgestaltung, die in der Fig. 3 dargestellt ist, eine dreieckige, von Geraden begrenzte Grundfläche, die insbesondere aus den Figuren 1 und 3 ersichtlich ist. Im dargestellten Ausführungsbeispiel handelt es sich um ein rechtwinkliges Dreieck, ohne dass die Erfindung auf eine solche, spezielle Geometrie beschränkt ist. Das über die dreieckige Grundfläche aus dem übrigen Lichtleiter 10 in das Auskoppelelement 14 eingetretene Licht wird anschließend von der über der Hypotenuse der dreieckigen Grundfläche stehenden Grenzfläche 30 reflektiert, wobei diese Reflexion bevorzugt eine interne Totalreflexion ist. Für eine solche Reflexion ist keine reflektierende Beschichtung der Grenzfläche 30 erforderlich.

Im Rahmen einer dazu alternativen oder ergänzenden Ausgestaltung ist die Grenzfläche 30 mit einem reflektierenden Material beschichtet. Das reflektierende Material ist bevorzugt eine dünne Metallschicht. Mit dieser Ausgestaltung kann auch noch Licht reflektiert werden, das die Bedingungen einer internen Totalreflexion an der Grenzfläche 30 nicht erfüllt. Gegenüber einer Ausgestaltung, die keine reflektierende Beschichtung vorsieht, müssen bei der Ausgestaltung mit der reflektierenden Beschichtung jedoch Energieverluste des Lichtes in Kauf genommen werden.

In jedem Fall wird das aus dem Volumen des Lichtleiters 10 auf die Grenzfläche 30 einfallende Licht dort so umgelenkt, dass es in einem steilen Winkel auf eine weitere Grenzfläche 32 fällt, die im dargestellten Ausführungsbeispiel parallel zu einer Längsseite des Lichtleiters 10 ausgerichtet ist. Dabei wird unter einem steilen Winkel hier jeder Winkel zwischen dem einfallenden Lichtstrahl und der Flächennormalen der Grenzfläche 32 verstanden, der kleiner als der Grenzwinkel der internen Totalreflexion ist. Das bedeutet, dass das unter steilen Winkeln auf die weitere Grenzfläche 32 einfallende Licht dort keine internen Totalreflexionen erfährt, sondern dass es über die weitere Grenzfläche 32 aus dem Auskoppelelement 14 und damit aus dem Lichtleiter 10 austritt.

Die weitere Grenzfläche 32 stellt insofern eine Lichtaustrittsfläche des Lichtleiters 10 dar. Die Grenzfläche 30 stellt dagegen eine Reflexionsfläche dar, die einfallendes Licht so umlenkt, dass das umgelenkte Licht beim nächsten Auftreffen auf eine Grenzfläche des Lichtleiters 10 ausgekoppelt wird. Abgesehen davon, dass an der Reflexionsfläche umgelenktes Licht ausgekoppelt wird und daher im weiteren Transportvolumen des Lichtleiters nicht mehr zur Verfügung steht, entnimmt die Reflexionsfläche Licht ohne Störung und Rückwirkung in das Transportvolumen des Lichtleiters, beziehungsweise auf das dort transportierte Licht. Die Grenzfläche 30 bildet zusammen mit der weiteren Grenzfläche 32 zumindest einen Teil der Grenzfläche des Auskoppelelements 14. Das in den Figuren 1 bis 4 dargestellte Ausführungsbeispiel zeichnet sich insbesondere dadurch aus, dass das Auskoppelelement 14 aus einer Seite 26 des lichtleitenden Volumens des Lichtleiters 10 herausragt und dass die Lichtaustrittsfläche 32 einen Teil der Grenzfläche des Auskoppelelements 14 bildet. Die als Störelement dienende Grenzfläche 30 und die als Lichtaustrittsfläche dienende weitere Grenzfläche 32 liegen auf derselben Seite 26 des Lichtleiters 10.

Die verbleibende Grenzfläche 33, die in der Figur 3 über eine Kathete der Grundfläche des Auskoppelelements 14 liegt, hat dagegen für das Auskoppeln des von links her propagierenden Lichtes keine Bedeutung.

Die Grundfläche des Auskoppelelements 14 liegt in der Seite 26 des Lichtleiters 10. Die äußere Form der Einheit aus dem Auskoppelelement 14 und dem Lichtleiter 10 entsteht gewissermaßen dadurch, dass die Form des Auskoppelelements 14 gedanklich auf die Seite 26 aufgesetzt wird und dadurch die Grundfläche definiert. Diese Überlegung dient jedoch lediglich der Veranschaulichung der Grundfläche. Reale Lichtleiter werden bevorzugt als einstückige bauliche Einheiten aus einem oder mehreren Auskoppelelementen 14 mit dem übrigen lichtleitenden Volumen des Lichtleiters 10 hergestellt.

Wenn diese in der Seite 26 dienende Grundfläche beim Stand der Technik als Lichtaustrittsfläche dienen sollte, müsste ein auf der gegenüberliegenden Seite 28 liegender Flächenbereich Störelemente aufweisen, die das Licht steil zu der in der Seite 26 liegenden Grundfläche hin umlenken würden.

Dieser in der Seite 28 liegende Flächenbereich könnte daher beim Stand der Technik nicht oder nur sehr eingeschränkt als Transportfläche dienen.

Um dies zu kompensieren, müsste die in der Seite 26 liegende Grundfläche beim Stand der Technik nicht nur die Funktion als Lichtaustrittsfläche erfüllen, sondern sie müsste zusätzlich auch noch als Transportfläche dienen.

Dies ist bei der Erfindung nicht der Fall. Bei der Erfindung kann der genannte Flächenbereich der Seite 28 von Störelementen freibleiben und so als Transportfläche dienen.

Die bei der Erfindung aus der Seite 26 herausragende und als Lichtaustrittsfläche dienende weitere Grenzfläche 32 hat keine Funktion als Transportfläche zu erfüllen und kann daher beliebig für die Umlenkung und Bündelung des ausgekoppelten Lichtes optimiert werden.

Diese räumliche Trennung der für Lichttransport und Lichtauskopplung erforderlichen Grenzflächen des Lichtleiters erlaubt eine verbesserte Optimierung jeder einzelnen der Grenzflächen in Bezug auf ihre Aufgabe des Lichttransports oder der Lichtauskopplung.

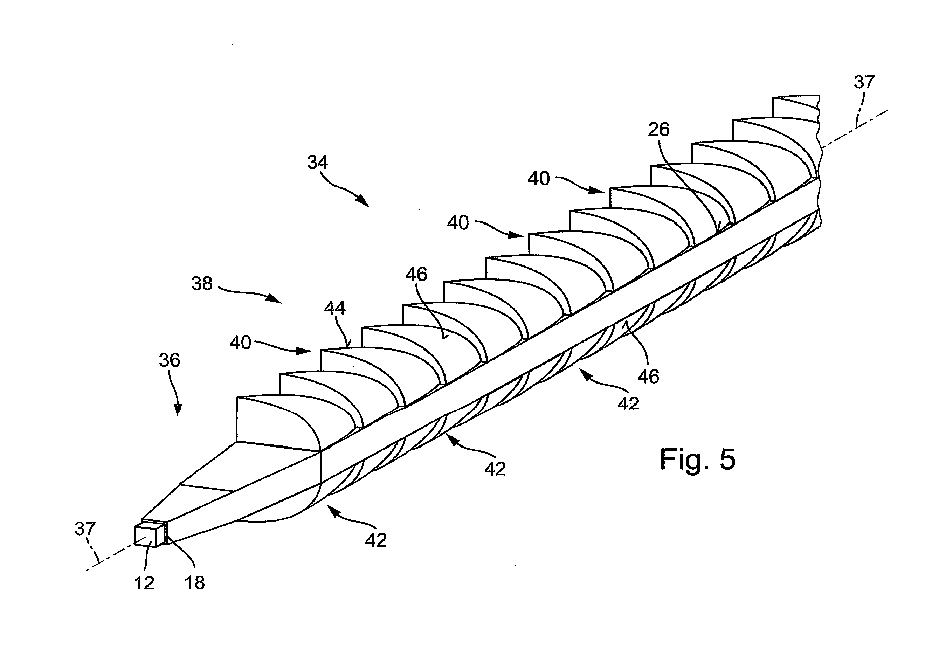

Figur 5 zeigt einen Lichtleiter 34 als weiteres Ausführungsbeispiel der Erfindung zusammen mit einer Lichtquelle 12. Der Lichtleiter 34 weist einen Parallelisierungsabschnitt 36 und einen Transport- und Auskoppelabschnitt 38 auf. Der Parallelisierungsabschnitt 36 liegt im Lichtweg zwischen der Lichtquelle 12 und dem Transport- und Auskoppelabschnitt 38 und besitzt eine Lichteintrittsfläche 18, die einen vergleichsweise kleineren Lichteintrittsquerschnitt aufweist. Von der Lichteintrittsfläche 18 ausgehend vergrößert sich der Querschnitt des Parallelisierungsabschnitts 36 bis zu einem vergleichsweise größeren Übergangsquerschnitt, mit dem der Parallelisierungsabschnitt 36 in den Transport- und Auskoppelabschnitt 38 übergeht. Dabei beziehen sich die Angaben "vergleichsweise größer" und "vergleichsweise kleiner" jeweils auf einen Vergleich des genannten Lichteintrittsquerschnitts mit dem genannten Übergangsquerschnitt.

Durch die Querschnittsvergrößerung sind Flächennormalen von Seitenflächen des Parallelisierungsabschnitts 36 nicht rechtwinklig zu einer optischen Achse 37 des Lichtleiters 10, sondern sie weisen gegenüber einer rechtwinkligen Anordnung eine Neigung auf. Aufgrund des Umstandes, dass der gegenüber der Flächennormalen gemessene Einfallswinkel des von innen auf die Seitenflächen des Parallelisierungsabschnitts 36 einfallenden Lichtes gleich dem Ausfallswinkel des dort reflektierten Lichtes ist, ergibt sich, dass sich der Winkel, den das Licht mit der optischen Achse bildet, bei der Reflexion verändert.

Die Veränderung erfolgt dabei so, dass der Winkel sich verringert. Als Folge wird das im Parallelisierungsabschnitt 36 propagierende Licht mit jeder inneren Totalreflexion etwas paralleler. Durch diese Parallelisierung tritt entsprechend paralleles Licht über den Übergangsquerschnitt in den Transport- und Auskoppelabschnitt 38 ein. Als Folge tritt auszukoppelndes Licht unter ähnlichen Winkeln, also ebenfalls bis zu einem gewissen Grad parallelisiert, in die Auskoppelelemente 40 und 42 ein, die beim Gegenstand der Figur 3 auf gegenüberliegenden und zueinander parallelen Seiten eines sich geradlinig erstreckenden und damit nicht gekrümmt verlaufenden Transport- und Auskoppelabschnitts 38 mit einem rechteckigen Querschnitt angeordnet sind.

Die Auskoppelelemente 40, 42 sind dabei bevorzugt so angeordnet, dass sie Licht über den im Zusammenhang mit den Figuren 1 bis 4 erläuterten Strahlengang des Lichtstrahls 16 auskoppeln. Das heißt insbesondere, dass die in der Figur 5 sichtbare Kante 44 eine als Störelement dienende Fläche des Auskoppelelements 40 begrenzt und dass die Fläche 46 eine Lichtaustrittsfläche des Auskoppelelements 40 (und/oder 42) und damit eine Auskoppelfläche des Lichtleiters 34 darstellt.

Die gesamte Lichtaustrittsfläche des Lichtleiters 34 ergibt sich als Summe sämtlicher Lichtaustrittsflächen 46 seiner Auskoppelelemente 40 und 42. Dies gilt im Übrigen auch für die übrigen in dieser Anmeldung vorgestellten Ausgestaltungen.

Wie bereits erläutert wurde, erlaubt die Erfindung eine Optimierung der Geometrie der Lichtaustrittsflächen 46, die mit Blick auf die zu erzielende Lichtverteilung des ausgekoppelten Lichtes erfolgt. In der Ausgestaltung, die in der Figur 5 dargestellt ist, handelt es sich um fokussierende Lichtaustrittsflächen 46. Die Fokussierung wird bevorzugt dadurch erreicht, dass die fokussierenden Lichtaustrittsflächen 46 einen Ausschnitt aus der Fläche eines dreiachsigen Ellipsoids bilden, dessen Halbachsen a, b und c jeweils paarweise ungleich sind.

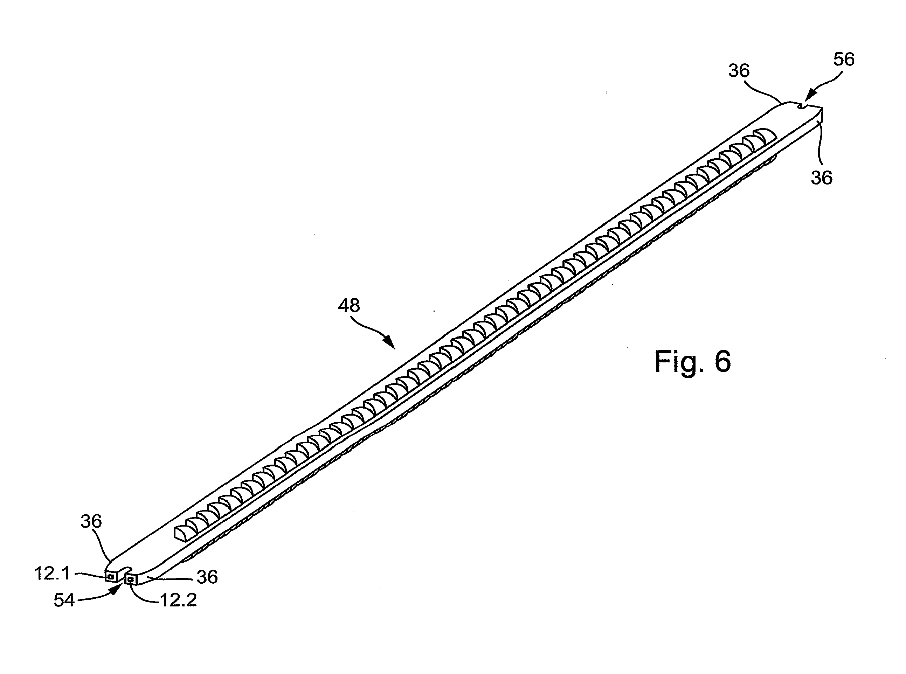

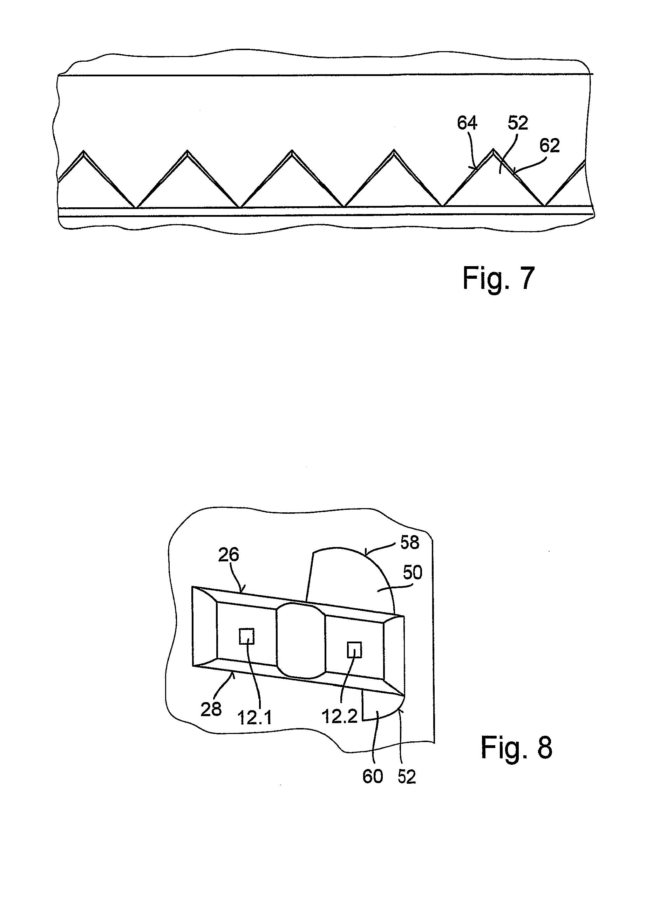

Die Figuren 6, 7 und 8 beziehen sich auf ein weiteres Ausführungsbeispiel eines erfindungsgemäßen Lichtleiters 48. Der Lichtleiter 48 besitzt, wie auch der Lichtleiter 10 und der Lichtleiter 34, eine langgestreckte und geradlinig verlaufende Form mit einem rechteckigen Querschnitt, aus dem Auskoppelelemente 50 und 52 herausragen. Dies ist in der Fig. 8 dargestellt. Der Lichtleiter 48 weist zwei Enden 54 und 56 auf, an denen jeweils zwei Lichtquellen 12.1 und 12.2 angeordnet sind. Der Lichtleiter 48 wird daher von jedem seiner beiden Enden mit Licht gespeist. Das Licht jeder Lichtquelle 12.1, 12.2 wird in einem der jeweiligen Lichtquelle zugeordneten Parallelisierungsabschnitt 36 parallelisiert, so wie es im Zusammenhang mit der Figur 5 erläutert worden ist.

Die Auskoppelelemente 50 und 52 besitzen unterschiedliche Größen. Sowohl die fokussierenden Lichtaustrittsflächen 58 der auf einer Seite 26 angeordneten, größeren Auskoppelelemente 50, als auch die Lichtaustrittsflächen 60 der auf der gegenüberliegenden Seite 28 angeordneten und vergleichsweise kleineren Auskoppelelemente 52 sind bei dieser Ausgestaltung jeweils Ausschnitte aus Zylinderflächen.

Abweichend von der erwähnten Rechteckform, kann der Querschnitt des Lichtleiters 48 auch eine Rautenform aufweisen, wie sie in der Figur 8 dargestellt ist.

Figur 7 zeigt eine Draufsicht auf Auskoppelelemente 50 oder 52 des Lichtleiters 48 aus einer Perspektive, die der Draufsicht-Perspektive aus der Figur 3 vergleichbar ist. Bei einem Vergleich der Gegenstände der Figuren 7 und 3 fällt auf, dass man sich die einzelnen Auskoppelelemente 52 beim Gegenstand der Figur 7 jeweils als aus zwei Hälften zusammengesetzt vorstellen kann, wobei jede Hälfte in ihrer Draufsicht dem Umriss aus der Figur 3 entspricht. Diese Abweichung der Form des Auskoppelelements 52 beim Gegenstand der Figur 7 von der Form des Auskoppelelements 14 beim Gegenstand der Figur 3 berücksichtigt, dass das Licht beim Gegenstand der Figur 7 von beiden Seiten, das heißt in der Draufsicht der Figur 7 sowohl von rechts als auch von links, durch den Lichtleiter 48 propagiert, während das Licht beim Gegenstand der Figur 3 nur von links durch den Lichtleiter 10 propagiert.

Figur 3 zeigt auch, dass für die Auskopplung sowohl die Fläche des Störelements 30 als auch die als Lichtaustrittsfläche dienende Grenzfläche 32 von Bedeutung ist. Die verbleibende Grenzfläche 33 des in der Fig. 3 in einer Draufsicht dargestellten Auskoppelelements 14 hat dagegen für das Auskoppeln des beim Gegenstand der Fig. 3 von links her propagierenden Lichtes keine Bedeutung.

Diese Fläche kann daher so umgestaltet werden, dass sie für von rechts durch den Lichtleiter propagierendes Licht ein Störelement darstellt. Die Störfläche 62 des Auskoppelelements 52 des Gegenstands der Figur 7 dient damit der Auskopplung des von links kommenden Lichtes, während die Störfläche 64 für die Auskopplung des von rechts kommenden Lichtes dient.

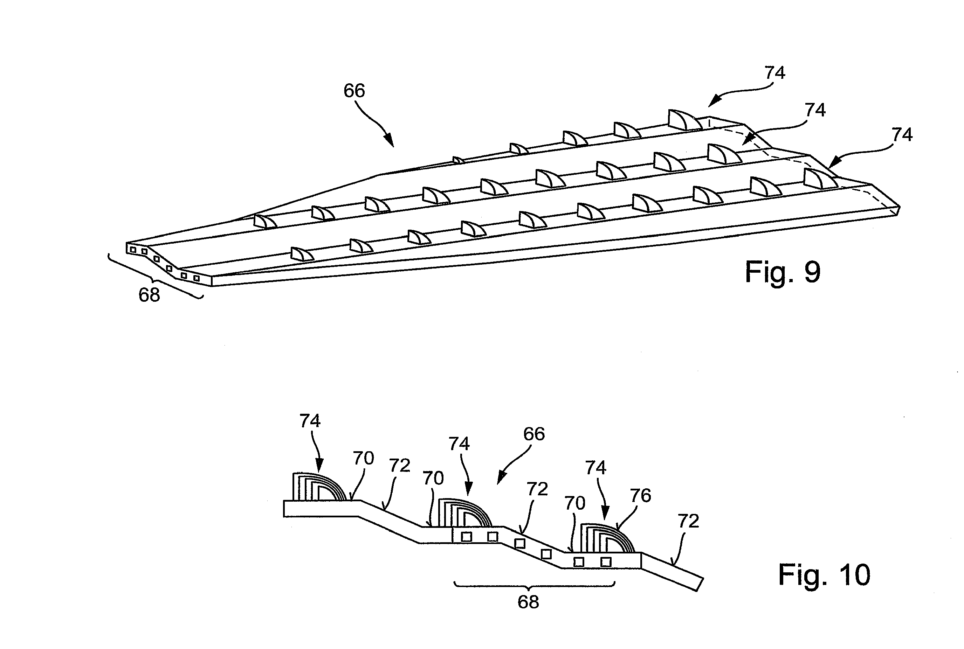

Die Figuren 9 und 10 stellen Ansichten eines terrassenförmigen Lichtleiters 66 dar, der von einer Seite her mit einer Anordnung 68 aus n = 6 Lichtquellen mit Licht gespeist wird. Die Zahl n kann auch andere Werte als 6 annehmen, wobei Werte von 1 kleiner oder gleich n kleiner gleich 30 bevorzugt sind. Figur 9 zeigt eine perspektivische Ansicht eines solchen Lichtleiters 66, und die Figur 10 zeigt eine Ansicht der Lichteintrittsfläche des Lichtleiters 66 im Profil.

Der Lichtleiter 66 weist erste Flächen 70 auf, die zueinander parallel sind und die in der Darstellung der Figur 10 horizontal angeordnet sind.

Darüber hinaus weist der Lichtleiter 66 zweite Flächen 72 auf, von denen jede schrägliegend zwischen zwei ersten Flächen 70 angeordnet ist, so dass die zwei ersten Flächen 70 parallel sind, aber nicht in der gleichen Ebene liegen. Die zweiten Flächen 72 sind in einer Ausgestaltung untereinander parallel. In einer anderen Ausgestaltung liegen Sie nicht parallel zueinander.

Auskoppelelemente 74 sind jeweils in horizontalen Bereichen der ersten Flächen angeordnet. Die fokussierenden Lichtaustrittflächen 76 sind hier Kugelflächenabschnitte. Die Auskoppelelemente 74 sind entlang der ersten Fläche 70 bevorzugt äquidistant angeordnet. Die Größe der Auskoppelelemente 74 wächst in einer bevorzugten Ausgestaltung mit Ihrer Entfernung von der Anordnung 68 von Lichtquellen an. Dadurch wird der Umstand berücksichtigt, dass die Lichtstromstärke des in dem Lichtleiters 66 propagierenden Lichtes mit zunehmender Entfernung von der Anordnung 68 von Lichtquellen abnimmt. Diese Abnahme hat zwei Ursachen. Eine erste Ursache liegt darin, dass sich das Volumen des Lichtleiters 66 in der Ausgestaltung, die in den Figuren 9 und 10 dargestellt ist, mit zunehmender Entfernung von der Anordnung 68 von Lichtquellen vergrößert. Eine zweite Ursache liegt darin, dass die Auskoppelelemente 74, die näher an der Anordnung 68 von Lichtquellen liegen, den weiter entfernten Auskoppelelementen 74 gewissermaßen Licht wegnehmen, indem sie es aus dem Lichtleiter 66 auskoppeln.

Die Auswirkungen beider Ursachen können mit einer Vergrößerung der Auskoppelelemente 74 verringert, kompensiert oder sogar überkompensiert werden, bei der die Größe der Auskoppelelemente 74 mit zunehmender Entfernung von der Anordnung 68 von Lichtquellen anwächst. Bei einer Kompensation ergibt sich zum Beispiel eine homogene Helligkeitsverteilung der leuchtenden und fokussierenden wirkenden Lichtaustrittsflächen 76 der verschiedenen Auskoppelelemente 74.

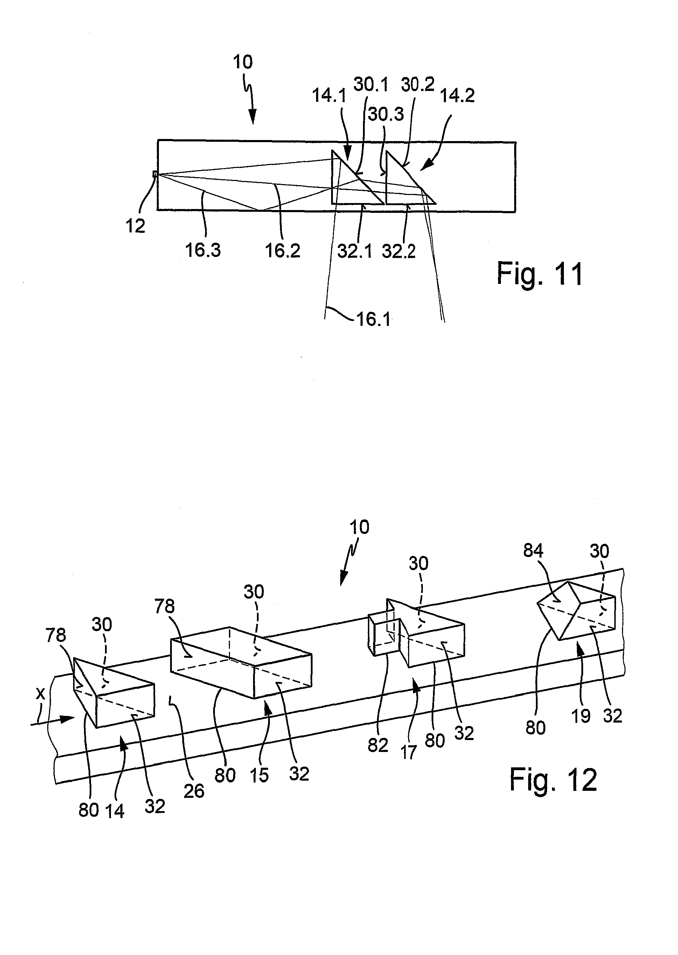

Figur 11 zeigt einen Vorteil, der sich durch die Hintereinander-Anordnung von Auskoppelelementen 14.1 und 14.2 längs eines Ausführungsbeispiels eines erfindungsgemäßen Lichtleiters 10 ergibt. Abgesehen davon, dass die Figur 11 zwei Auskoppelelemente 14.1 und 14.2 zeigt, entspricht die Darstellung der Figur 11 der Darstellung der Figur 3. Bei den Auskoppelelementen 14.1 und 14.2 handelt es sich insbesondere um Auskoppelelemente, wie sie als Auskoppelelement 14 im Zusammenhang mit den Figuren 1 bis 4 erläutert worden sind. Der Lichtstrahl 16.1 tritt auf die im Zusammenhang mit dem Strahl 16 an Hand der Figuren 1 bis 4 erläuterte Weise in das Auskoppelelement 14 ein und wird an dessen Grenzfläche 30.1, die als Störelement dient, zur weiteren Grenzfläche 32.1 umgelenkt. Dort trifft der reflektierte Lichtstrahl 16.1 in einem so steilen Winkel auf, dass er keine interne Totalreflexion mehr erfährt, sondern über die dann als Lichtaustrittsfläche dienende weitere Grenzfläche 32.1 aus dem Lichtleiter 10 ausgekoppelt wird.

Ganz analog wird der Lichtstrahl 16.2 in das zweite

Auskoppelelement 14.2 eintreten, an dessen Grenzfläche 30.2 umgelenkt und über dessen weitere Grenzfläche 32.2 aus dem Lichtleiter 10 ausgekoppelt werden. Insofern ergibt sich noch kein Unterschied zum Gegenstand der Figuren 1 bis 3.

Ein Unterschied ergibt sich jedoch, wenn man den Verlauf des Lichtstrahls 16.3 verfolgt. Dieser Lichtstrahl 16.3 tritt nach einer einmaligen Reflexion, die an einer Wand des Lichtleiters 10 erfolgt, in das erste Auskoppelelement 14.1 ein und trifft dort unter einem steilen Winkel auf die als Störelement dienende Grenzfläche 30.1 auf. Dabei wird unter einem steilen Winkel ein Winkel verstanden, der zwischen dem Strahl und der Flächennormalen liegt und kleiner als der Grenzwinkel der internen Totalreflexion ist. Der Strahl 16.3 wird daher an der Grenzfläche 30.1 nicht innerhalb des ersten Auskoppelelements 14.1 umgelenkt, sondern er wird aus der Grenzfläche 30.1 ausgekoppelt.

Aufgrund der Tatsache, dass hinter dem ersten Auskoppelelement 14.1 wenigstens ein weiteres Auskoppelelement 14.2 angeordnet ist, geht der Lichtstrahl 16.3 jedoch nicht verloren, sondern er wird über eine dritte Grenzfläche 30.3 in das zweite Auskoppelelement 14.2 eingekoppelt und von diesem durch eine Reflexion an der als Störelement dienenden weiteren Grenzfläche 30.2 so umgelenkt, dass auch der Lichtstrahl 16.3 in gewünschter Weise über eine Lichtaustrittsfläche, hier über die Grenzfläche 32.2 des Auskoppelelements 14.2, ausgekoppelt wird. Dabei erfolgt die Auskopplung insbesondere so, dass auch der Lichtstrahl 16.3 zur Erzeugung einer gewünschten Lichtverteilung beiträgt.

Figur 12 zeigt verschiedene Ausgestaltungen von Auskoppelelementen 14, 15, 17 und 19, die aus einer Seite 26 eines Lichtleiters 10 herausragen.

Ganz links ist ein Auskoppelelement 14 dargestellt, wie es bereits in dem Zusammenhang mit den Figuren 1 bis 4 erläutert worden ist. Dieses Auskoppelelement 14 zeichnet sich unter anderem dadurch aus, dass eine Durchdringungslinie 80, längs der das Auskoppelelement 14 aus der Seite 26 des Lichtleiters 10 herausragt, ein Dreieck bildet. Bei dem Dreieck handelt es sich in einer bevorzugten Ausgestaltung um ein rechtwinkliges Dreieck.

Der Abschnitt der Durchdringungslinie 80 unter der Lichtaustrittsfläche 32 liegt bevorzugt schräg zu den beiden anderen Abschnitten der Durchdringungslinie 80, wobei seine Lage durch die Forderung bestimmt wird, dass die Grenzfläche 30 auf sie einfallendes Licht zu der als Lichtaustrittsfläche dienenden Grenzfläche 32 umlenken soll. Die Durchdringungslinie 80 umschließt eine Grundfläche 78, über der das Auskoppelelement 14 aus der Seite 26 des Lichtleiters 10 herausragt.

Die Grundfläche des Auskoppelelements 15 wird ebenfalls durch eine Durchdringungslinie 80 begrenzt. Das Auskoppelelement 15 unterscheidet sich vom Auskoppelelement 14 insbesondere dadurch, dass die Grundfläche 78 des Auskoppelelements 15 viereckig ist, während sie beim Auskoppelelement 14 dreieckig ist.

Ein Abschnitt der Durchdringungslinie 80, längs dem die als Lichtaustrittsfläche dienende Grenzfläche 32 aus dem Lichtleiter 10 herausragt, liegt bevorzugt parallel zu einer Hauptausbreitungsrichtung x des Lichtes. Der Abschnitt der Durchdringungslinie 80, der weder die die Lichtaustrittsfläche bildende Grenzfläche 32 noch die Licht auf die Lichtaustrittfläche 32 umlenkende Grenzfläche 30 begrenzt, liegt bevorzugt quer zur Hauptausbreitungsrichtung x des Lichtes im Lichtleiter 10.

Die viereckige Grundfläche 78 des Auskoppelelements 15 ist insbesondere größer als die dreieckige Grundfläche des Auskoppelelements 14. Die Menge des vom übrigen Lichtleiter über die Grundfläche 78 in das darüber liegende Auskoppelelement eintretenden Lichtes wächst mit zunehmender Größe der Grundfläche 78. Aufgrund der im Vergleich zur Grundfläche des Auskoppelelements 14 größeren Grundfläche 78 des Auskoppelelements 15 ist die in das Auskoppelelement 15 eintretende Lichtmenge unter sonst gleichen Bedingungen größer als die in das Auskoppelelement 14 eintretende Lichtmenge.

Unter der Voraussetzung, dass die Lichtaustrittsflächen 32 der beiden Lichtauskoppelelemente 14 und 15 gleich groß sind, ist dann auch die Lichtmenge, die über die als Lichtaustrittsfläche dienende Grenzfläche 32 des Auskoppelelements 15 ausgekoppelt wird, größer als die entsprechende Lichtmenge, die aus der als Lichtaustrittsfläche dienenden Grenzfläche 32 des Auskoppelelement 14 ausgekoppelt wird.

Entsprechend wird die Grenzfläche 32 des Auskoppelelements 15 bei gleichem Lichtstrom im Lichtleiter 10 heller erscheinen als die Grenzfläche 32 des Auskoppelelements 14. Das bedeutet, dass durch eine Variation der Größe der Grundfläche 78 die Helligkeit beeinflusst werden kann.

In einer bevorzugten Ausgestaltung ist vorgesehen, dass weiter von einer Lichtquelle entfernt angeordnete Auskoppelelemente eine größere Grundfläche 78 aufweisen als näher an einer Lichtquelle angeordnete Auskoppelelemente, um die Lichtaustrittsflächen der Auskoppelelemente untereinander gleich hell und damit homogen leuchtend erscheinen zu lassen.

Das Auskoppelelement 17 unterscheidet sich vom Auskoppelelement 14 insbesondere dadurch, dass eine Durchdringungslinie 80, längs der das Auskoppelelement 17 aus der Seite 26 des Lichtleiters 10 herausragt, einen Vorsprung 82 in einem Abschnitt der Durchdringungslinie 80 aufweist, der weder die die Lichtaustrittfläche bildende Grenzfläche 32 noch die Licht auf die Lichtaustrittsfläche 32 umlenkende Grenzfläche 30 begrenzt. Auch bei dieser Ausgestaltung wird die Grundfläche des Auskoppelelements im Vergleich zur Grundfläche des Auskoppelelements 14 vergrößert.

Das Auskoppelelement 17 bietet mit der Anordnung des Vorsprungs 82 einen weiteren Freiheitsgrad, in dem bestimmte Bereiche der als Störelement dienenden Grenzfläche 32 je nach Anordnung des Vorsprungs 82 und je nach Größe des Vorsprungs 82 gezielt stärker beleuchtet werden.

Das Auskoppelelement 19 zeichnet sich dadurch aus, dass eine Grenzfläche 84 des Auskoppelelements 19, die weder die Lichtaustrittsfläche 32 bildet noch die die Licht auf die Lichtaustrittfläche 32 umlenkende Grenzfläche 30 bildet, unter einem kleineren Winkel als 90 Grad aus der Seite 26 des Lichtleiters 10 herausragt.

Dieser Ausgestaltung erleichtert insbesondere ein Herauslösen eines durch Spritzgießen hergestellten Lichtleiters 10 aus einer Spritzgussform. In einer bevorzugten Ausgestaltung werden die hier vorgestellten Lichtleiter aus PMMA(Polymethylmethacrylat) oder PC (Polycarbonat) durch Spritzgießen hergestellt.

Eine bevorzugte Verwendung erfindungsgemäßer Lichtleiter ergibt sich bei Beleuchtungseinrichtungen, die entweder zur Beleuchtung des Innenraums des Kraftfahrzeugs dienen, oder die Signalfunktionen für andere Verkehrsteilnehmer erfüllen. Beispiele solcher Signalfunktionen sind das Tagfahrlicht, das Blinklicht, das Bremslicht und das Positionslicht, ohne dass diese Aufzählung als abschließend verstanden werden soll.

Entsprechend ihrer Funktion können solche Leuchten als Bugleuchten oder als Heckleuchten verwendet werden. Bugleuchten können darüber hinaus in Frontscheinwerfer des Kraftfahrzeugs integriert sein. Um variable Anforderungen an die Kosten und das Design solcher Leuchten sowie an die von den Leuchten zu erzeugenden Lichtverteilungen zu erfüllen, bieten sich zahlreiche Variationen der in dieser Anmeldung vorgestellten Gegenstände an.

So kann je nach Ausgestaltung eine Lichteinkopplung an einem oder an mehreren Enden eines erfindungsgemäßen Lichtleiters erfolgen.

An jeder Seite kann die Lichteinkopplung durch eine oder mehrere Lichtquellen erfolgen.

Die Lichtquellen sind bevorzugt Halbleiterlichtquellen, insbesondere Lumineszenzdioden.

Die Lichtfarbe aller Lichtquellen kann identisch sein. Dies bietet sich an, wenn der Lichtleiter mit weißem Licht als Tagfahrlicht oder als Blinklicht mit gelbem Licht betrieben soll.

Alternativ kann der Lichtleiter auch mit verschieden farbigen Lichtquellen gespeist werden, so dass er je nachdem, welche Lichtquellen eingeschaltet sind, verschiedene Lichtfunktionen erfüllen kann. In einer Ausgestaltung weist ein Lichtleiter weiße und gelbe Lichtquellen auf, wobei für einen Tagfahrlichtbetrieb nur die weißen und für einen Blinklichtbetrieb nur die gelben Lichtquellen eingeschaltet werden.

In einem Parallelisierungsabschnitt, in den das Licht der Lichtquellen in den Lichtleiter eingekoppelt wird, kann eine Parallelisierung des Lichtes erfolgen, wie sie in dieser Anmeldung beschrieben worden ist. In anderen Ausgestaltungen kann eine solche Parallelisierung auch weggelassen werden.

Der Lichtleiter selbst kann gerade oder gebogen, insbesondere ringförmig verlaufen, er kann stabförmig oder flächig sein und dabei insbesondere eine Neigung oder eine Verdrillung aufweisen.

Im Bezug auf Ausgestaltungen der Auskoppelelemente kann vorgesehen sein, dass die Größe der Auskoppelelemente mit ihrer Entfernung von der Lichtquelle zunimmt oder auch nicht zunimmt.

Darüber hinaus kann die als Störelement dienende Grenzfläche eben oder nicht eben sein. Ferner kann die als Lichtaustrittsfläche dienende Grenzfläche eben oder nicht eben sein. Bei einer nicht ebenen Ausführung der Austrittsfläche kann diese insbesondere konvex und damit bündelnd oder konkav und damit zerstreuend sein. Dies richtet sich nach der konkreten Lichtverteilung, die mit dem Lichtleiter erzeugt werden soll.

Darüber hinaus kann der Lichtleiter nur identische Auskoppelelemente aufweisen, oder er kann in einer anderen Ausgestaltung auch Auskoppelelemente mit unterschiedlichen Formen einzelner Elemente aufweisen.

Die Auskoppelelemente können dicht an dicht liegen oder auch mit einem Abstand voneinander angeordnet sein.

Darüber hinaus können die Auskoppelelemente sowohl lediglich auf einer Seite des Lichtleiters angeordnet sein, oder sie können auf mehreren Seiten des Lichtleiters, insbesondere auf einander gegenüber liegenden Seiten des Lichtleiters angeordnet sein.

Bei flächigen Lichtleitern können die Auskoppelelemente in Reihen, bzw. in regelmäßigen Anordnungen angeordnet sein, oder sie können auch ohne erkennbare Ordnung über die Fläche verteilt sein.

Die einzelnen Auskoppelelemente können dazu eingerichtet sein, jeweils fürs sich die vorgeschriebene Lichtverteilung zu erzeugen oder jeweils nur einen Teil der vorgeschrieben Lichtverteilung zu erzeugen. So kann zum Beispiel vorgesehen sein, dass in einer Anordnung von Auskoppelelementen einige Auskoppelelemente in eine erste Richtung, und andere Auskoppelelemente in eine andere Richtung strahlen, so dass sich erst in der Summe die gewünschte Lichtverteilung ergibt.

Eine weitere bevorzugte Ausgestaltung zeichnet sich dadurch aus, dass die Auskoppelelemente eine stark bündelnde Wirkung besitzen und dass die zu erzeugende Lichtverteilung mit einer nachgelagerten Streuscheibe erzeugt wird.

Eine weitere Ausgestaltung sieht vor, dass neben den hier vorgestellten Auskoppelelementen auch bekannte Auskoppelelemente in einem erfindungsmäßen Lichtleiter integriert sind, wobei die bekannten Auskoppelelemente Störelemente und Lichtaustrittsflächen aufweisen, die auf verschiedenen Seiten eines Lichtleiters angeordnet sind.

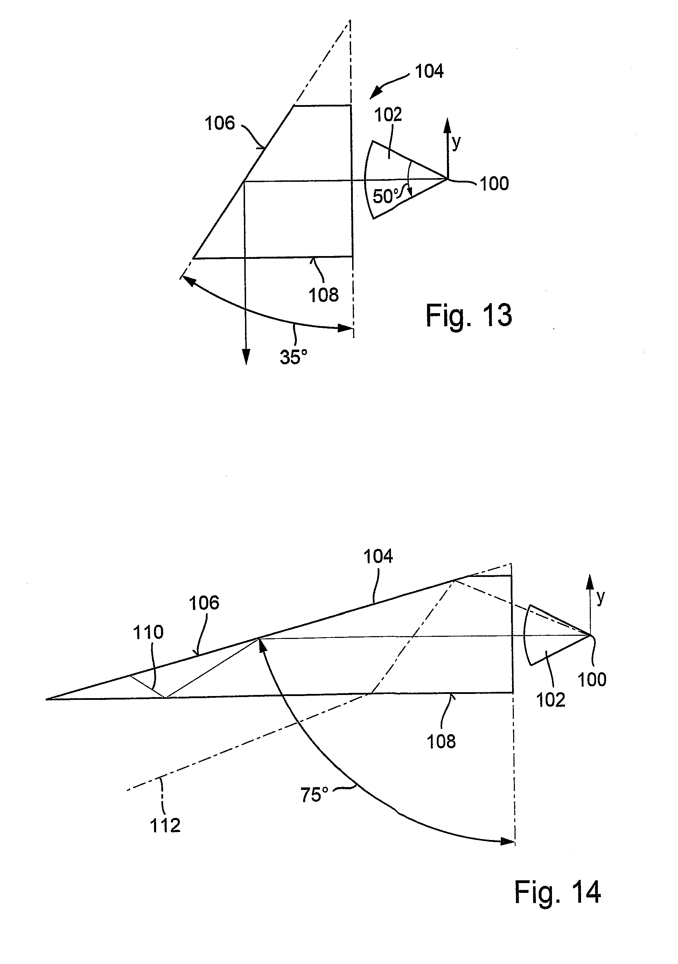

Im folgenden werden unter Bezug auf die Figuren 13 ff Ausgestaltungen vorgestellt, die sich durch Auskoppelelemente auszeichnen, bei denen Licht zunächst an einer ersten Reflexionsfläche und dann an einer zweiten Reflexionsfläche innerhalb des Auskoppelelements umgelenkt wird, bevor es über die Lichtaustrittsfläche des Auskoppelelements ausgekoppelt wird.

Diese Ausgestaltungen basieren auf den folgenden Erkenntnissen. Die unter Bezug auf die Figuren 1 bis 12 erläuterten Ausgestaltungen zeichnen sich dadurch aus, dass aus dem Lichtleiter 10 in ein Auskoppelelement eingetretenes Licht an der Reflexionsfläche des Auskoppelelements einmal reflektiert wird, bevor es über die Lichtaustrittsfläche des Auskoppelelements ausgekoppelt wird.

Bei der Umlenkung an der Reflexionsfläche kann das Licht dabei vergleichsweise viel Energie verlieren. Figur 13 soll dies verdeutlichen: eine Lichtquelle 100 strahlt einen Lichtkegel 102 mit gegebenem Öffnungswinkel (hier 50°) in ein sehr vereinfachtes Modell eines Lichtleiters 104. Im Lichtleiter 104 wird es an einer Reflexionsfläche 106 (Anstellwinkel 35°) teilweise intern total reflektiert und tritt an der Lichtaustrittsfläche 108 wieder aus. Der an der Reflexionsfläche 106 nicht total reflektierte Anteil geht durch Transmission durch die Reflexionsfläche 106 unter Brechung verloren.

Der verlorengehende Anteil hängt stark von dem Anstellwinkel der Reflexionsfläche ab. So hat der Erfinder durch Simulationsrechnungen festgestellt, dass der verlorengehende Anteil mit kleiner werdendem Anstellwinkel stark zunimmt. Für einen Lichtleiter wurde zum Beispiel festgestellt, dass der Quotient aus reflektierter Lichtenergie im Zähler und einfallender Lichtenergie im Nenner für einen Lichtkegel 102 mit einem Öffnungswinkel von 30° zwischen 100% für einen Anstellwinkel von 60° und 0% für einen Anstellwinkel von 35° variiert.

Ein solcher Quotient kann als Wirkungsgrad interpretiert werden. Für einen 50°-Lichtkegel 102 wurden Wirkungsgrade zwischen ca. 86% für einen 60°-Anstellwinkel und 2% für einen 35°-Anstellwinkel ermittelt. Der Wirkungsgrad hängt also stark von dem Anstellwinkel und nur wenig von dem Öffnungswinkel des Lichtkegels ab. Die starke Abhängigkeit des Wirkungsgrades von dem Anstellwinkel ist deshalb störend, weil der Anstellwinkel auch die Richtung definiert, in welche die über die Lichtaustrittsfläche 108 ausgekoppelte Lichtenergie abgestrahlt wird. Die Lage eines Lichtleiters im Scheinwerfer ist in der Regel einerseits nicht frei wählbar. Andererseits fordert das Gesetz jedoch bestimmte Lichtabstrahlrichtungen. Beide Forderungen zusammen führen daher unter Umständen zu erheblichen Wirkungsgradeinbußen.

Figur 14 veranschaulicht weitere Nachteile, die bei Auskoppelelementen mit nur einer Reflexionsfläche (bzw. einer Reflexion vor der Auskopplung) auftreten können. Für sehr große Anstellwinkel (hier 75°) wird zwar das gesamte Licht an der Reflexionsfläche 106 total reflektiert, ein großer Anteil 110 dieses Lichts trifft im Folgenden jedoch unter einem Winkel auf die Austrittsfläche 108, der die Bedingung für Totalreflexion erfüllt. Dieses Licht wird daher an der Lichtaustrittsfläche 108 erneut gespiegelt. Dies kann sich mehrfach wiederholen, bis an einer der beiden Flächen 106, 108 die Bedingung für die Totalreflexion verletzt wird. Dann tritt das Licht 110 in völlig unkontrollierter Weise aus und ist im allgemeinen nicht geeignet, zum Erfüllen der gesetzlichen Vorgaben beizutragen. Das Licht 112 repräsentiert dagegen einen regulär ausgekoppelten Lichtanteil.

Insgesamt führen die beiden oben geschilderten Effekte dazu, dass die Systeme für große und kleine Anstellwinkel der Reflexionsfläche 106 nur mit geringer Effektivität arbeiten.

Es besteht daher ein Bedürfnis für eine weitere Verbesserung, mit der die geschilderte Abhängigkeit des Wirkungsgrades vom Anstellwinkel der totalreflektierenden Fläche und damit von der Einbausituation im Fahrzeug eliminiert oder zumindest verringert wird. Dies wird bei den im Folgenden dargestellten Ausgestaltungen dadurch erreicht, dass ein Lichtleiter nach einem der Ansprüche 1 bis 10 spezielle Auskoppelelemente aufweist. Die speziellen Auskoppelelemente zeichnen sich durch eine Grenzfläche aus, die eine erste Reflexionsfläche und eine zweite Reflexionsfläche aufweist. Die Reflexionsflächen sind relativ zu einer Durchdringungsfläche, über die das Auskoppelelement aus der Seite des Lichtleiters herausragt, und relativ zu der Lichtaustrittsfläche in spezieller Weise angeordnet. Die Anordnung zeichnet sich dadurch aus, dass über die Durchdringungsfläche in das Auskoppelelement eintretendes Licht, das an der ersten Grenzfläche eine interne Totalreflexion erfährt, dort so auf die zweite Grenzfläche umgelenkt wird, dass es an der zweiten Grenzfläche eine weitere interne Totalreflexion erfährt, durch die es so auf die Lichtaustrittsfläche umgelenkt wird, dass es dort aus dem Auskoppelelement austritt.

Der Kern dieser vorteilhaften Ausgestaltungen besteht von der Wirkung her darin, dass man eine einzige Totalreflexion durch zwei Totalreflexionen ersetzt, wobei die Anstellwinkel der beteiligten Reflexionsflächen so gewählt werden, dass der Wirkungsgrad jedes Mal möglichst groß ist und bevorzugt bei 100% oder zumindest nahe bei 100% liegt.

Ferner wird die Lichtaustrittsfläche so angeordnet, dass das Licht dort nicht total reflektiert wird, sondern dass es dort gebrochen und durch Transmission ausgekoppelt wird. Bevorzugt ist ferner, dass eine und/oder beide total reflektierenden Reflexionsflächen und/oder die Lichtaustrittsfläche zur Formung des austretenden Lichtkegels genutzt werden, wodurch die zur Erreichung der gesetzlichen Vorgaben benötigte Lichtmenge minimiert werden kann. Auch dies trägt zu einer Wirkungsgradoptimierung bei.

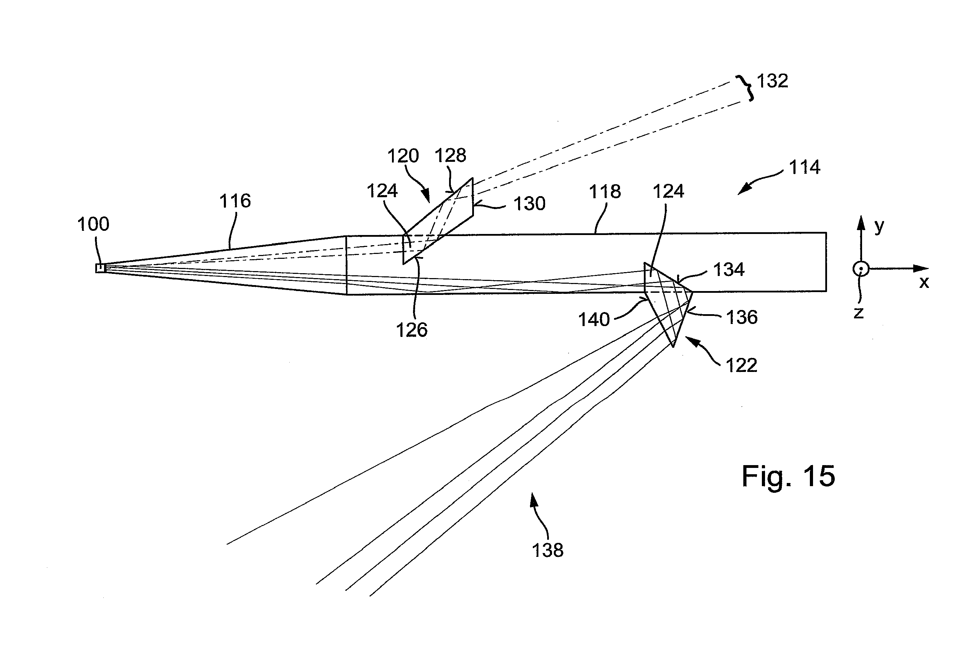

Die Figur 15 zeigt eine Draufsicht auf einen Lichtleiter 114. Das von einer Lichtquelle 100 abgestrahlte Licht tritt durch die Eintrittsfläche zunächst in einen Lichtleiterbereich 116 ein, dessen Querschnittsfläche mit zunehmendem Abstand von der Lichtquelle 100 ansteigt. Jede Spiegelung eines Strahls an einer der Seitenwände dieses Bereichs führt zu einer Verkleinerung des Winkels, den der Strahl mit der x-Richtung bildet. Nach diesem Parallelisierungsbereich 116 folgt ein Leitungsbereich 118 mit konstantem Querschnitt. Beide Bereiche 116, 118 sind der Übersichtlichkeit halber gerade verlaufend ausgebildet, das Ganze funktioniert aber natürlich ebenso mit gekrümmten Lichtleitern. Aufgesetzt auf den Leitungsbereich 118 sind zwei Auskoppelelemente 120, 122. Das näher an der Einkopplung, d.h. näher an der Lichtquelle 100 liegende Auskoppelelement 120 ist so ausgebildet, dass Strahlen, die in das Auskoppelelement 120 durch eine dreieckige, in der Oberfläche des Leitungsbereichs 118 liegende Durchdringungsfläche 124 oder Auflagefläche 124 in das Auskoppelelement 120 eintreten, nach zweimaliger Reflexion an als Reflexionsflächen dienenden Seitenwänden des Auskoppelelementes 120 durch die (hier ebene) Lichtaustrittsfläche 130 abgestrahlt werden.

Der kleine Abstrahlwinkel, den das ausgekoppelte Licht 132 mit der x-Richtung bildet, entspricht in etwa dem Winkel des regulär ausgekoppelten Anteils 112 in der Figur 14 (etwa 30°). Da der Anstellwinkel bei der Totalreflexion an den beiden Reflexionsflächen 126, 128 jeweils bei etwa 60° liegt, ergibt sich in beiden Fällen ein Wirkungsgrad von etwa 100%. Ferner trifft das zweimal reflektierte Licht so steil auf die Lichtaustrittsfläche 130, dass dort keine Totalreflexion stattfindet. Das Licht 132 tritt also auch zu nahezu 100% durch Transmission durch die Lichtaustrittsfläche 130 aus. Insgesamt ergibt sich für den Auskoppelprozeß also ebenfalls ein Wirkungsgrad von nahezu 100%. Dieses Auskoppelelement 120 stellt somit eine Lösung des im Zusammenhang mit der Figur 14 geschilderten Problems dar.

Im weiteren Verlauf des Lichtleiters folgt das zweite Auskoppelement 122. Dieses ist für eine Umlenkung um etwa 150° ausgelegt - ein Wert, der mit keiner anderen Technik erreicht werden kann. Bei einer vergleichbar großen, an einer einzigen Reflexionsfläche erfolgenden Umlenkung würde sich hier ein Wirkungsgrad in der Nähe von 0% ergeben. Der Anstellwinkel der ersten Reflexionsfläche 132 beträgt in der dargestellten Ausgestaltung 55°. Der Wirkungsgrad für die Reflexion eines engen Bündels liegt dann bei nahezu 100%. Die Richtungsänderung des dort reflektierten Lichtes beträgt 2 x (90°-55°) = 70°. Der Anstellwinkel der zweiten Reflexionsfläche beträgt 50°. Der Wirkungsgrad der Reflexion liegt dann für ein enges Bündel wiederum bei etwa 100%. Die Richtungsänderung des dort reflektierten Lichtes beträgt 2 x (90°- 50°) = 80°.

Die gesamte Richtungsänderung beträgt dann 70° + 80° = 150°. Da das Bündel nahezu senkrecht auf die Austrittsfläche 140 trifft, tritt dort keine Totalreflexion ein. Das ausgekoppelte Licht 132 verlässt den Lichtleiter 114 mit einer Transmission von nahezu 100%. Der Gesamtwirkungsgrad des Auskoppelements 122 beträgt somit auch in diesem Fall nahezu 100%. Ein wie in Figur 15 gestalteter Lichtleiter 114 veranschaulicht technische Zusammenhänge. Für eine Verwendung in einer Kraftfahrzeugbeleuchtungseinrichtung würde ein Lichtleiter noch Änderungen erfahren. Ein entsprechend geänderter Lichtleiter würde insbesondere eine Vielzahl von Auskoppelelementen aufweisen, die alle in die (nahezu) gleiche Richtung Licht abgeben, und die dicht an dicht über die gesamte Länge des Lichtleiters verteilt sind.

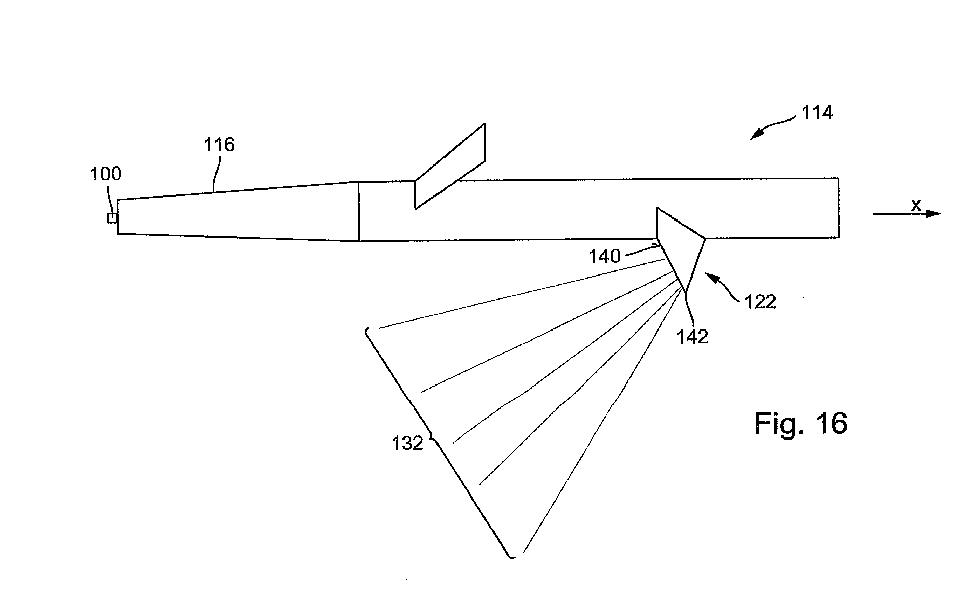

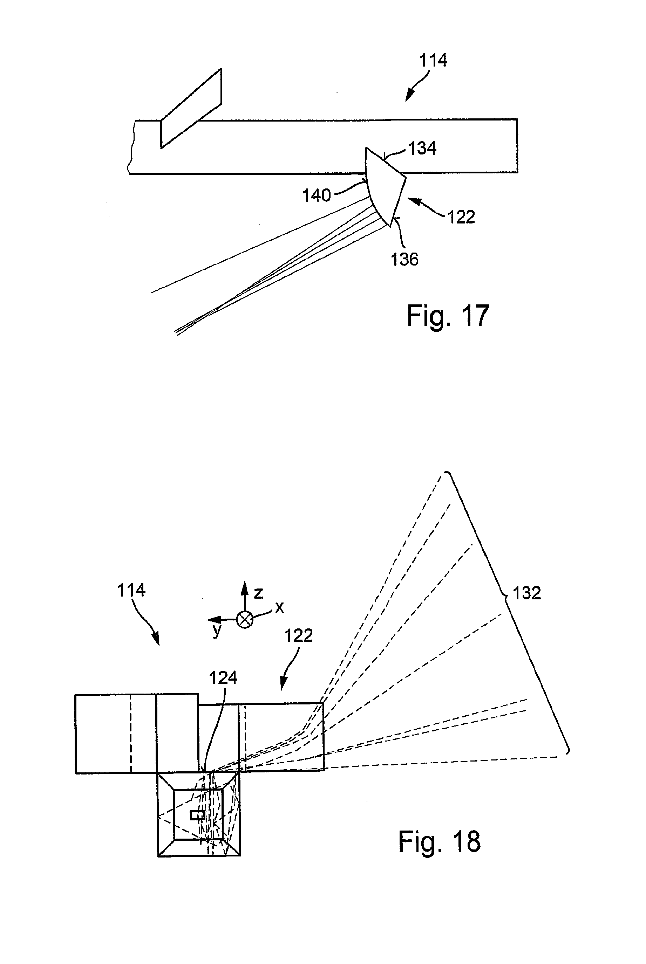

Figur 16 zeigt erneut den Lichtleiter 114 aus der Figur 15 mit folgenden Veränderungen: der Öffnungswinkel im Parallelisierungsbereich 116 wurde verringert, wodurch der Lichtkegel im Lichtleiter 114 und damit natürlich auch nach dem Verlassen einen deutlich größeren Öffnungswinkel aufweist. Weiterhin wurden die Strahlen im Lichtleiter nicht dargestellt. Im Folgenden soll nur das zweite Auskoppelelement 122 betrachtet werden. Wie man in Figur 16 deutlich erkennt, besteht zwischen dem Auskoppelort auf der Lichtaustrittsfläche 140 und dem gegenüber der x-Richtung gemessenen Auskoppelwinkel ein Zusammenhang: je näher der Auskoppelort an der Spitze 142 des Auskoppelements 122 liegt, umso größer ist der Winkel, den das ausgekoppelte Licht 132 mit der x-Richtung bildet. Diese Abhängigkeit erlaubt es, die Austrittsfläche 140 so umzugestalten, dass der Öffnungswinkel des ausgekoppelten Lichtes 132 verringert wird. Figur 17 zeigt dies beispielhaft: die ebene Lichtaustrittsfläche 140 aus der Fig. 16 wurde beim Gegenstand der Fig. 17 durch eine konvex gekrümmte Lichtaustrittsfläche 140 ersetzt. Alternativ oder ergänzend könnte man in analoger Weise natürlich auch eine der beiden Reflexionsflächen 134, 136 oder beide Reflexionsflächen 134, 136 mit einer Krümmung gestalten. Allerdings bietet sich die Lichtaustrittsfläche 140 am ehesten für eine gekrümmte Ausgestaltung an, weil dort der Ort-Winkel-Zusammenhang aufgrund des langen Weges, den das Licht im Auskoppelelement 122 zurückgelegt hat, am stärksten ausgeprägt ist.

Figur 18 zeigt erneut den Lichtleiter 114 aus der Figur 15. Die Blickrichtung verläuft parallel zur x-Richtung. Es ist zu erkennen, dass alle Strahlen des ausgekoppelten Lichtes 132 eine Aufwärtskomponente in z-Richtung aufweisen. Dies ergibt sich daraus, dass alle Strahlen, die über die Durchdringungsfläche 124 in ein Auskoppelelement 122 gelangen, das aus einer in z-Richtung oben liegenden Seite des Lichtleiters herausragt, eine z-Richtungskomponente aufweisen. Die gesetzlichen Vorgaben für Leuchten fordern allesamt eine Lichtverteilung, die in etwa symmetrisch zur Horizontalen liegt, die in der Fig. 18 parallel zu der x-y-Ebene liegt.

Um dies mit dem vorliegenden Lichtleiter 114 zu erreichen, bietet sich als einfachste Lösung die Möglichkeit an, den Lichtleiter 114 gekippt im Fahrzeug anzubringen.

Die zweite Möglichkeit besteht darin, eine Reflexionsfläche des Auskoppelelements entsprechend zu neigen, oder aber auch beide Reflexionsflächen oder aber eine oder beide Reflexionsflächen und die Lichtaustrittsfläche entsprechend zu neigen.

Eine dritte Möglichkeit besteht darin, eine Deckelfläche des Auskoppelelements zur Neutralisierung der Aufwärtstendenz zu verwenden.

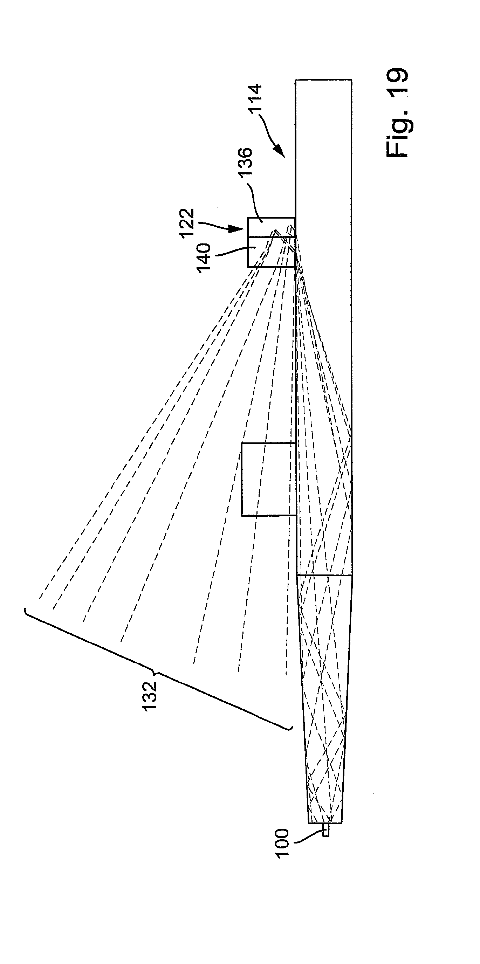

Eine vierte Möglichkeit nutzt analog zu dem unter Bezug auf die Fig. 16 erläuterten Vorgehen die Orts-Winkel-Abhängigkeit des ausgekoppelten Lichtes 132 beim Durchtritt durch die Lichtaustrittsfläche 140, wie sie exemplarisch in der Fig. 19 dargestellt ist. Natürlich kann auch hier die ebene Lichtaustrittsfläche zu einer in der x-z-Ebene konvexen Lichtaustrittsfläche 140 gekrümmt werden. In Verbindung mit einer in der x-y-Ebene konvexen Lichtaustrittsfläche führt diese Ausgestaltung sowohl in der Draufsicht als auch in der Seitenansicht zu einem Lichtkegel mit verringertem Öffnungswinkel. Als Ergebnis dieser weiteren Verformung ergibt sich in der Regel eine Freiformfläche, die horizontal und vertikal geschnitten jeweils eine konvex gekrümmte Kurve ergibt. In speziellen Fällen kann auch ein Abschnitt einer Kugel, eines Ellipsoiden oder einer Torusfläche oder eine diesen Flächen ähnliche Fläche den Anforderungen genügen.

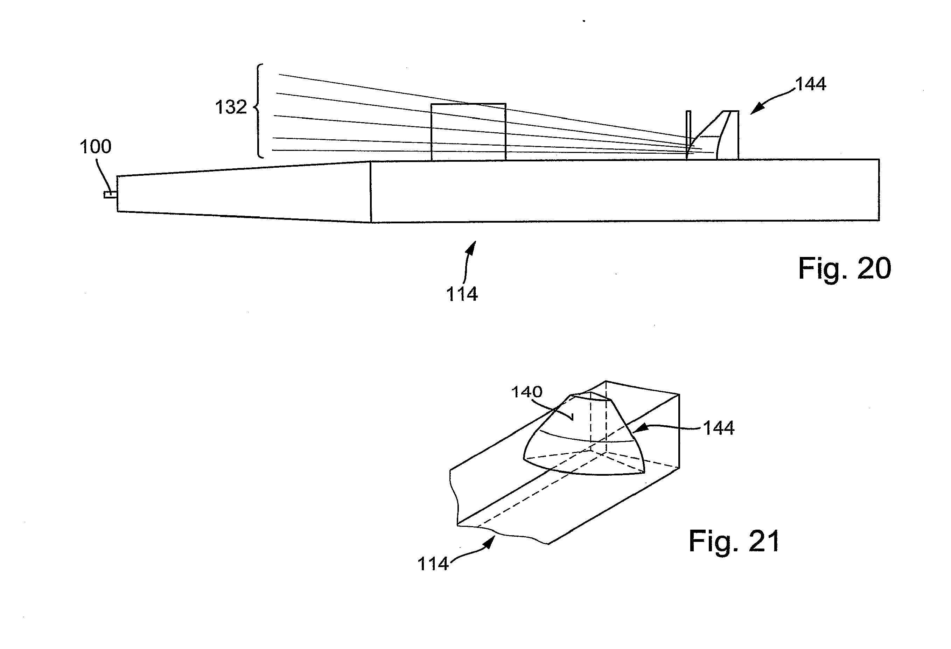

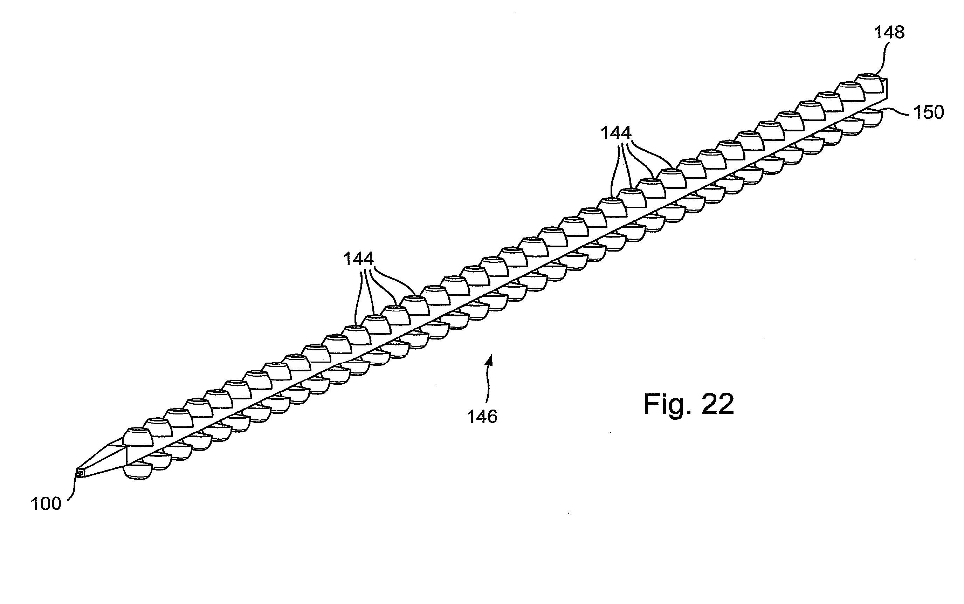

Figur 20 zeigt das entsprechend stärker gebündelte austretende Licht 132 aus den Figuren 18 und 19. Fig. 21 zeigt eine Schrägansicht einer zweifach im Raum konvex gekrümmten Lichtaustrittsfläche 140 eines neuartigen Lichtauskoppelelements 144. Figur 22 zeigt einen Lichtleiter 146 mit einer Vielzahl der neuartigen Auskoppelelemente 144. Insbesondere bei sehr großen oder sehr kleinen Umlenkwinkeln ist darauf zu achten, dass sich benachbarte Auskoppelelemente 144 nicht gegenseitig bestrahlen. Um dies zu vermeiden, kann der Abstand zwischen zwei Elementen 144 so groß gewählt werden, dass dieser unerwünschte Effekt vermieden wird. Falls in diesem Fall die insgesamt ausgekoppelte Lichtmenge nicht ausreicht, kann zusätzlich zu einer an einer Oberseite angeordneten ersten Reihe 148 von Auskoppelelementen 144 an der Unterseite des Lichtleiters 146 eine zweite Reihe 150 von Auskoppelelementen 144 platziert werden.

Um zu erreichen, dass alle Elemente für einen Betrachter gleich oder annähernd gleich hell erscheinen, kann die Größe der Elemente 144 mit zunehmendem Abstand von der Lichtquelle 100 vermindert werden. Alternativ gibt es die Möglichkeit, das Licht aus den weiter entfernten Elementen stärker zu bündeln, was beim Betrachter zum selben Ergebnis führt.

Die Serienentwicklung eines gekrümmten Lichtleiters ist sehr aufwändig, da alle Auskoppelelemente zum Aufbau der gesetzlich vorgegebenen Lichtverteilung beitragen müssen, was wiederum bedeutet, dass die Umlenkwinkel aller Elemente unterschiedlich sind und somit einzeln ausgelegt werden müssen. Weist der Lichtleiter zusätzlich eine Neigung gegenüber der Horizontalen auf, müssen auch die im Text zu den Figuren 16 bis 21 beschriebenen Arbeiten für jedes Element individuell ausgeführt werden. Wenn die Krümmung des Lichtleiters so verläuft, dass in einem Teilbereich eine Umlenkung erforderlich ist, die auch mit einem Reflexionselement effektiv zu erzielen ist, können natürlich diese unterschiedlichen Auskoppelelemente in Kombination mit den oben beschriebenen verwendet werden.

Eine weitere Ausgestaltung sieht vor, dass zusätzlich hinter dem Lichtleiter noch eine Lichtquelle angeordnet ist, welche den Lichtleiter durchleuchtet. Alternativ kann hinter dem Lichtleiter eine Fläche angeordnet werden, die Möglichkeiten zur Gestaltung gibt. Diese Fläche kann beispielsweise matt oder reflektierend ausgestaltet sein. Sie kann zum Beispiel eine metallisierte Oberfläche oder einfach eine eingefärbte Fläche aufweisen.

Die bis hier beschriebenen Ausgestaltungen nutzen eine Auskopplung, bei der Licht, das aus dem Hauptlichtleitervolumen in den Abzweig eintritt, zunächst eine interne Totalreflexion an einer ersten Grenzfläche des Auskoppelelements erfährt, durch die es zu einer als Lichtaustrittsfläche dienenden zweiten Grenzfläche umgelenkt wird. Auf die zweite Grenzfläche fällt das umgelenkte Licht so steil ein, dass es dort keine interne Totalreflexion mehr erfährt, sondern ausgekoppelt wird.

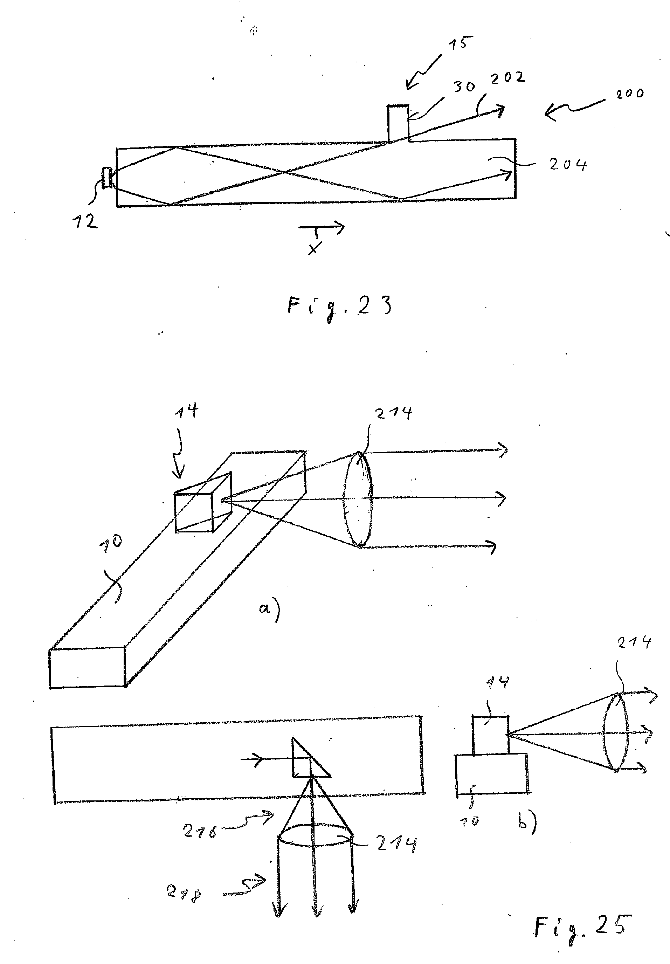

Die Erfindung ist aber nicht auf diese Art der Auskopplung beschränkt. Im Einzelnen zeigt die Fig. 23 einen Lichtleiter 200 mit einem Auskoppelelement 15, das eine quer zur Hauptausbreitungsrichtung des Lichtes stehende Lichtaustrittsfläche aufweist. Es handelt sich also zum Beispiel um ein quaderförmiges Auskoppelelement 15, wie es in der Fig. 12 dargestellt ist. Die Hauptausbreitungsrichtung erstreckt sich dabei längs des Lichtleiters 200. Fig. 23 zeigt, dass es auch möglich ist, die Lichtaustrittsfläche 30 so anzuordnen, dass Licht 202, das aus dem Hauptlichtleitervolumen 204 in das Auskoppelelement 15 eintritt, direkt so steil auf die Lichtaustrittsfläche 30 einfallen zu lassen, dass es ohne eine vorhergehende und innerhalb des Auskoppelelements 15 stattfindende interne Totalreflexion ausgekoppelt wird. In der Figur 23 wird dies dadurch veranschaulicht, dass Lichtstrahlen 202 zwischen ihrem Eintritt in das Auskoppelelement 15 und ihrem Austritt aus dem Lichtleiter 200 keine umlenkende Reflexion erfahren. Aufgrund seiner Symmetrie ist das Quader-förmige Auskoppelelement besonders gut geeignet, in Verbindung mit Lichtleitern verwendet zu werden die von gegenüberliegenden Stirnflächen aus mit Licht von dort angeordneten Lichtquellen gespeist werden, seien es gleichfarbiges Licht oder verschiedenfarbiges Licht.

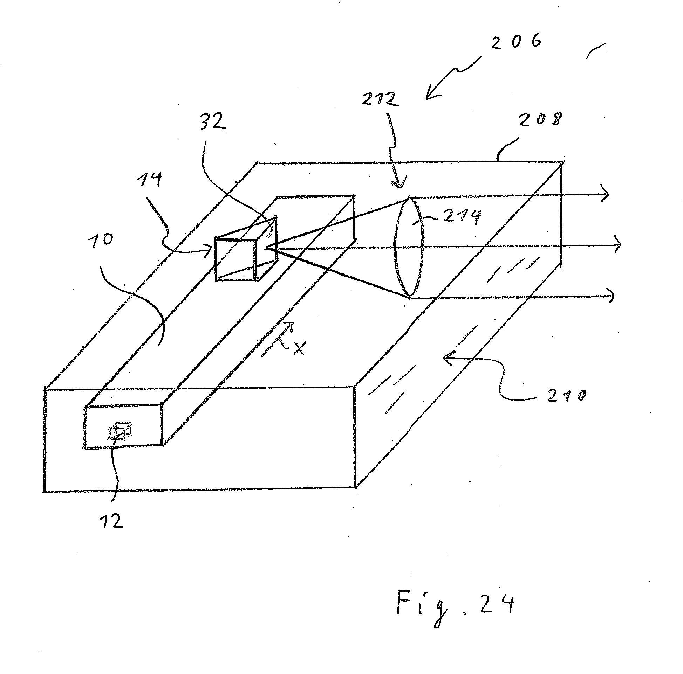

Figur 24 zeigt ein Ausführungsbeispiel einer erfindungsgemäßen Beleuchtungseinrichtung 206. Die Beleuchtungseinrichtung 206 weist ein Gehäuse 208 mit einer Lichtaustrittsöffnung auf, die von einer transparenten Abdeckscheibe 210 abgedeckt wird.

Die Beleuchtungseinrichtung 206 weist eine Anordnung aus einer Lichtquelle 12 und einem Lichtleiter 10 auf. Diese Anordnung steht hier stellvertretend für eine der weiter oben erläuterten Anordnungen von Lichtleitern und Lichtquellen, ohne auf solche Anordnungen beschränkt zu sein. Die Anordnung ist dazu eingerichtet, Licht der Lichtquelle über eine Lichteintrittsfläche des Lichtleiters in den Lichtleiter einzukoppeln und dieses Licht längs einer der Form des Lichtleiters folgenden Hauptausbreitungsrichtung x zwischen als Transportflächen dienenden Seitenflächen des Lichtleiters zu einer Lichtaustrittsfläche 32 des Lichtleiters zu führen. Die Beleuchtungseinrichtung 206 zeichnet sich dadurch aus, dass die Lichtaustrittsfläche 32 eine Grenzfläche eines quer zur Hauptausbreitungsrichtung x aus einer Seite des Lichtleiters herausragenden Auskoppelelements 14 ist, und dass die Beleuchtungseinrichtung 206 ein Licht brechendes optisches Element 212 aufweist, das dazu eingerichtet ist, aus der Lichtaustrittsfläche 32 ausgekoppeltes Licht in wenigstens eine vorbestimmte Richtung zu lenken. In der dargestellten Ausgestaltung handelt es sich bei dem optischen Element 212 um eine Linse 214.

Fig. 25 zeigt die Anordnung aus Lichtleiter und Linse aus der Fig. 24 in verschiedenen Ansichten, wobei die Fig. 25a eine Schrägansicht zeigt. Die Linse ist in einer Ausgestaltung dazu eingerichtet, aus dem Lichtleiter über das Auskoppelelement ausgekoppeltes Licht zu zerstreuen, zu parallelisieren oder zu bündeln. Die Parallelisierung oder Bündelung erfolgt dabei bevorzugt so, dass das ausgekoppelte und parallelisierte oder gebündelte Licht eine vorgegebene Beleuchtungsaufgabe erfüllt. Bei einer Innenraumleuchte handelt es sich in einer Ausgestaltung um die Aufgabe, eine Helligkeit in einem eng begrenzten Bereich des Innenraums zu erzeugen, so dass die Leuchte als Leseleuchte nutzbar ist, ohne eine unzulässig hohe Blendung des Fahrers zu erzeugen.

Bei einer als Signalleuchte dienenden Außenleuchte eines Kraftfahrzeugs handelt es sich um die Aufgabe, eine für die betreffende Lichtfunktion regelkonforme Lichtverteilung, sei es eine Blinklicht-, eine Bremslicht-, eine Tagfahrlicht- oder eine andere Signallichtfunktion, im Vorfeld der Leuchte zu erzeugen. Ob es sich bei der Linse im Einzelfall um eine zerstreuende, parallelisierende oder bündelnde Linse handelt, hängt letztlich davon ab, inwieweit bereits das aus dem Auskoppelelement oder den Auskoppelelementen, austretende Licht dazu geeignet ist, die Beleuchtungsaufgabe zu erfüllen.

Die Linse, oder vielmehr allgemeiner, das Licht brechende optische Element hat in diesem Zusammenhang also die Funktion, aus dem Licht, das aus dem Auskoppelelement oder den Auskoppelelementen austritt, eine gewünschte Lichtverteilung zu erzeugen.

Alternativ zu einer rein zerstreuenden, parallelisierenden oder bündelnden Wirkung, bei der ein zentraler Strahl eines durch die Linse hindurch tretenden Lichtbündels keine Richtungsänderung erfährt, sieht eine weitere Ausgestaltung ein optisches Element vor, das auch die Ausrichtung des Lichtbündels im Raum ändert. Ein optisches Element, das diese Wirkung besitzt, ist zum Beispiel ein Prisma oder eine Linse, die im Strahlengang so angeordnet ist, dass das Lichtbündel in Bezug auf eine optische Achse der Linse unsymmetrisch durch die Linse hindurchtritt. Als Beispiel eines unsymmetrischen Durchtritts kann man an eine Situation denken, bei der nur eine Hälfte der Linse im Strahlengang liegt. Diese Hälfte kann man dann näherungsweise als Prisma betrachten, das zwei Licht brechende Kanten aufweist, an denen die Lichtrichtung eine Änderung erfährt.

Die Fig. 25b zeigt eine Seitenansicht der Anordnung, die in erster Linie einen möglichen Querschnitt der Linse verdeutlicht. In dieser Ausgestaltung handelt es sich um eine bikonvexe Linse, also um eine sammelnde Linse, die je nach Anordnung parallelisierend oder bündelnd wirken kann.

Die Fig. 25 zeigt eine Draufsicht auf den Gegenstand der Figuren 25a und 25b. In der dargestellten Ausgestaltung erzeugt die Linse 214 aus einem divergent einfallenden Bündel 216 paralleles Licht 218. Je nach Beleuchtungsaufgabe und Öffnungswinkel des Lichtes, das vom Auskoppelelement her auf die Linse einfällt, kann es sich auch um eine Linse mit wenigstens einer konkaven brechenden Fläche und/oder einer planen brechenden Fläche handeln.

In einer Ausgestaltung ist für jedes Auskoppelelement ein Licht brechendes optisches Element vorgesehen. Die optischen Elemente sind dann in einer Ausgestaltung untereinander gleich, was ein homogenes Erscheinungsbild im unbeleuchteten Zustand ergibt. Alternativ sind sie nicht untereinander gleich, was zur Erzeugung einer bestimmten Lichtverteilung vorteilhaft sein kann.

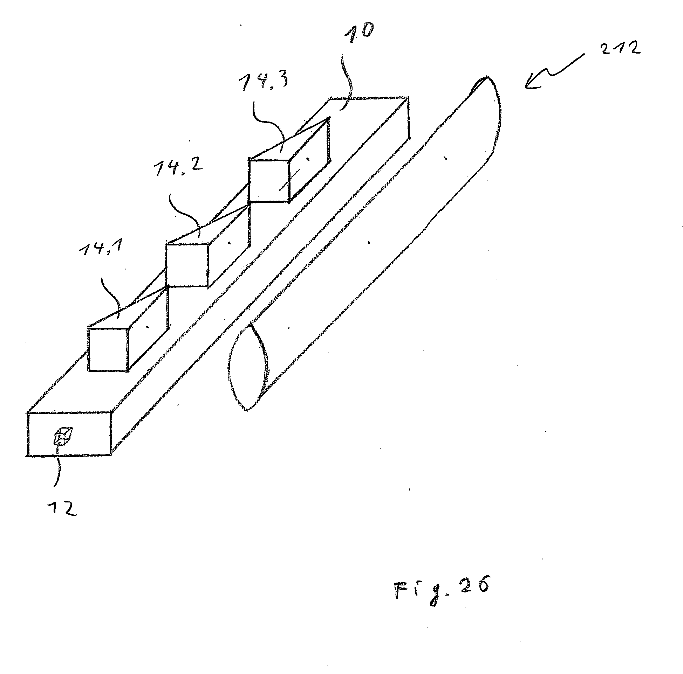

Fig. 26 zeigt eine Ausgestaltung, bei der ein einzelnes Licht brechendes optisches Element 212 nicht einem einzelnen Auskoppelelement, sondern einer Mehrzahl von Auskoppelelementen 14.1, 14.2, 14.3 wirkungsmäßig zugeordnet ist. Die wirkungsmäßige Zuordnung ergibt sich dabei dadurch, dass das Licht brechende optische Element 212 hier so groß ist und so angeordnet ist, dass es von jedem einzelnen der Mehrzahl von Auskoppelelementen beleuchtet wird. Das optische Element ist hier eine bikonvexe langgestreckte Linse. Die brechenden Flächen sind in einer Ausgestaltung Ausschnitte von Zylindermantelflächen. Je nach Beleuchtungsaufgabe sind aber auch hier andere Linsenformen möglich, wie sie unter Bezug auf die Fig. 25 erläutert worden sind. Darüber hinaus ist auch hier eine Ausgestaltung als eine zentrale Lichtrichtung änderndes optisches Element möglich.

Weitere Ausgestaltungen sehen vor, dass einem Auskoppelelement mehrere Licht brechende optische Elemente wirkungsmäßig zugeordnet sind, oder dass die Zuordnung so erfolgt, dass eine erste Teilmenge von Auskoppelelementen einem ersten Licht brechenden optischen Element wirkungsmäßig zugeordnet ist, eine zweite Teilmenge von Auskoppelelementen einem zweiten Licht brechenden optischen Element wirkungsmäßig zugeordnet ist, und so weiter. Beim Gegenstand der Fig. 26 sind alle n Auskoppelelemente 14.1, 14.2, 14.3 eines Lichtleiters einem einzelnen Licht brechenden optischen Element zugeordnet, wobei n jede natürliche Zahl sein kann.

## Patentansprüche

1. Beleuchtungseinrichtung (206) für ein Kraftfahrzeug mit einer Anordnung aus einer Lichtquelle (12) und einem Lichtleiter (10), wobei die Anordnung dazu eingerichtet ist, Licht der Lichtquelle über eine Lichteintrittsfläche des Lichtleiters in den Lichtleiter einzukoppeln, dieses Licht längs einer der Form des Lichtleiters folgenden Hauptausbreitungsrichtung (x) zwischen als Transportflächen dienenden Seitenflächen des Lichtleiters zu einer Lichtaustrittsfläche des Lichtleiters zu führen, **dadurch gekennzeichnet, dass** die Lichtaustrittsfläche eine Grenzfläche eines quer zur Hauptausbreitungsrichtung aus einer Seite des Lichtleiters herausragenden Auskoppelelements (14) ist, und dass die Beleuchtungseinrichtung ein Licht brechendes optisches Element (212) aufweist, das dazu eingerichtet ist, aus der Lichtaustrittsfläche ausgekoppeltes Licht in wenigstens eine vorbestimmte Richtung zu lenken.

2. Beleuchtungseinrichtung (206) nach Anspruch 1, **dadurch gekennzeichnet, dass** eine Durchdringungslinie (80), längs der das Auskoppelelement (14) aus der Seite (26) des Lichtleiters (10) herausragt, ein Dreieck bildet.

3. Beleuchtungseinrichtung (206) nach Anspruch 1 oder 2, **dadurch gekennzeichnet, dass** eine Durchdringungslinie (80), längs der das Auskoppelelement (15) aus der Seite (26) des Lichtleiters (10) herausragt, ein Viereck bildet.

4. Beleuchtungseinrichtung (206) nach nach Anspruch 1 oder 2, **dadurch gekennzeichnet, dass** eine Grenzfläche (84) des Auskoppelelements (19), die weder die Lichtaustrittsfläche (32) noch die Licht auf die Lichtaustrittsfläche (32) umlenkende Grenzfläche (30) bildet, unter einem kleineren Winkel als 90° aus der Seite (26) des Lichtleiters (10) herausragt.

5. Beleuchtungseinrichtung (206) nach einem der vorhergehenden Ansprüche, **dadurch gekennzeichnet, dass** eine Größe der Auskoppelelemente mit zunehmender Entfernung der Auskoppelelemente von einem zur Einkopplung von Licht eingerichteten Einkoppelbereich des Lichtleiters zunimmt.

6. Beleuchtungseinrichtung (206) nach einem der vorhergehenden Ansprüche, **dadurch gekennzeichnet, dass** eine als Lichtaustrittsfläche des Auskoppelelements dienende Grenzfläche (32) eben ist.

7. Beleuchtungseinrichtung (206) nach einem der vorhergehenden Ansprüche, **dadurch gekennzeichnet, dass** eine als Lichtaustrittsfläche des Auskoppelelements dienende Grenzfläche (32) konvex oder konkav ist.

8. Beleuchtungseinrichtung (206) nach einem der vorhergehenden Ansprüche, **dadurch gekennzeichnet, dass** sie dazu eingerichtet ist, zur Beleuchtung des Innenraums des Kraftfahrzeugs zu dienen oder Signalfunktionen für andere Verkehrsteilnehmer zu erfüllen.

9. Beleuchtungseinrichtung (206) nach Anspruch 8, **dadurch gekennzeichnet, dass** sie als Bugleuchte oder als Heckleuchte verwendet wird.

10. Beleuchtungseinrichtung (206) nach einem der vorhergehenden Ansprüche, **dadurch gekennzeichnet, dass** das Licht brechende optische Element dazu eingerichtet ist, aus dem Lichtleiter über das Auskoppelelement ausgekoppeltes Licht zu zerstreuen, zu parallelisieren oder zu bündeln.

11. Beleuchtungseinrichtung (206) nach einem der vorhergehenden Ansprüche, **dadurch gekennzeichnet, dass** das Licht brechende optische Element eine Linse ist.

12. Beleuchtungseinrichtung (206) nach einem der vorhergehenden Ansprüche, **dadurch gekennzeichnet, dass** das Licht brechende optische Element dazu eingerichtet ist, auch die Ausrichtung des Lichtbündels im Raum zu ändern.

13. Beleuchtungseinrichtung (206) nach einem der vorhergehenden Ansprüche, **dadurch gekennzeichnet, dass** für jedes Auskoppelelement ein Licht brechendes optisches Element vorgesehen ist.

14. Beleuchtungseinrichtung (206) nach einem der vorhergehenden Ansprüche, **dadurch gekennzeichnet, dass** ein einzelnes Licht brechendes optisches Element nicht einem einzelnen Auskoppelelement, sondern einer Mehrzahl von Auskoppelelementen wirkungsmäßig zugeordnet ist.

15. Beleuchtungseinrichtung (206) nach einem der vorhergehenden Ansprüche, **dadurch gekennzeichnet, dass** einem Auskoppelelement mehrere Licht brechende optische Elemente wirkungsmäßig zugeordnet sind, oder dass die Zuordnung so erfolgt, dass eine erste Teilmenge von Auskoppelelementen einem ersten Licht brechenden optischen Element wirkungsmäßig zugeordnet ist, eine zweite Teilmenge von Auskoppelelementen einem zweiten Licht brechenden optischen Element wirkungsmäßig zugeordnet ist.
